# EUROPÄISCHE PATENTSCHRIFT

(11) **EP 4 022 658 B1**
(45) Veröffentlichungstag und Bekanntmachung des Hinweises auf die Patenterteilung: **29.07.2026**
(21) Anmeldenummer: 20758191.9
(22) Anmeldetag: 19.08.2020
(51) Int. Cl.: H01G 2/08, H01G 2/00, H01G 4/38

(54) **FOLIENKONDENSATOR FÜR LEISTUNGSELEKTRONIK**
FILM CAPACITOR FOR POWER ELECTRONIC
CONDENSATEUR À FILM POUR ÉLECTRONIQUE DE PUISSANCE

(30) Priorität: 26.08.2019 DE 102019212777; 21.11.2019 DE 102019217976
(43) Veröffentlichungstag der Anmeldung: 06.07.2022
(73) Patentinhaber: Westermann, Wolfgang, 68165 Mannheim (DE)
(72) Erfinder: WESTERMANN, Axel, 10117 Berlin (DE)
(74) Vertreter: Bardehle Pagenberg Partnerschaft mbB Patentanwälte Rechtsanwälte
(86) Internationale Anmeldenummer: PCT/EP2020/073178
(87) Internationale Veröffentlichungsnummer: WO 2021/037626

(56) Entgegenhaltungen:
- DE-A1- 102013 216 941
- DE-A1- 2 624 724
- JP-A- 2011 210 863
- US-A- 1 821 803

## Beschreibung

Die vorliegende Erfindung betrifft einen Folienkondensator für eine Leistungselektronik sowie eine Kondensatorbaugruppe bestehend aus einem oder mehreren Folienkondensatoren, wobei der eine oder die mehreren Folienkondensatoren durch Anschlusselemente elektrisch kontaktiert und miteinander verbunden sind, und ein Verfahren zur Herstellung eines solchen Folienkondensators.

Insbesondere im Bereich der Leistungselektronik werden zusehends Folienkondensatoren eingesetzt. So umfasst die Anwendung von Folienkondensatoren unter anderem beispielweise den Einsatz als Zwischenkreiskondensatoren bzw. DC-Link-Kondensatoren, oder beispielsweise den Einsatz zur Löschung oder Dämpfung von Spannungsspitzen, die z.B. beim Schalten von Leistungshalbleitern wie u.a. IGBTs entstehen. Im Vergleich zu anderen Kondensatortypen wie den Elektrolytkondensatoren, weisen Folienkondensatoren diverse Vorteile wie eine erhöhte Lebensdauer, eine bessere Temperaturstabilität sowie Zuverlässigkeit aufgrund ihrer selbstheilenden Eigenschaften auf. Ein bestehendes Problem bei Folienkondensatoren stellen jedoch parasitäre Induktivitäten und Widerstände dar, die sich bei hohen Schaltfrequenzen im Leistungselektronikbereich nachteilig auswirken.

Die Hersteller von Folienkondensatoren sind daher immer bestrebt die parasitären Widerstände und Induktivitäten soweit wie möglich zu verringern oder zu eliminieren. Parasitäre Widerstände können beispielsweise mit vertretbaren Kosten durch kurze und dicke Anschlüsse bzw. durch Sammelschienen auf einfache Weise wirksam minimiert werden. Eine wirksame Reduzierung oder Minimierung der parasitären Induktivitäten gestaltet sich hingegen komplizierter und aufwendiger, da eine entsprechende äußere Leitungsführung so gestaltet werden muss, dass die Stromflüsse so orientiert sind, dass sich die durch die Stromflüsse erzeugten Magnetfelder weitestgehend kompensieren. Diese Leitungsführung durch Anschlusselemente erfolgt geometrisch bedingt um den Einzelkondensator bzw. die Kondensatorbaugruppe herum, wobei man sowohl die Polarität von Einzelkondensatoren bei einer Kondensatoreinheit als auch die Polarität der untereinander isolierten Anschlusselemente, beispielsweise Sammelschienen (sogenannte Busbars), variiert.

EP 3 477 669 A1 offenbart einen Folienkondensator in der Form eines Rundwickels, der einen speziellen starren Wickelkern aufweist, der innen hohl ist. Eine zumindest teilweise Kompensation der Magnetfelder, die durch Wechselstrom in den Belägen des Kondensators erzeugt werden, erfolgt dabei mittels einer Zuleitung mit entgegengesetzter Polung, die im Inneren des Kondensators durch das Innere des starren Wickelkerns verläuft. Ein solcher Kondensator ist jedoch aufgrund der Verwendung des erforderlichen speziellen starren Wickelkerns und seiner Bauweise kompliziert und kostspielig herzustellen. Auch ist der Kondensator durch die Verwendung des Wickelkerns in seiner äußeren Form auf die Form eines Rundwickels beschränkt, was seine Packungsdichte als Bestandteil einer Kondensatorbaugruppe, im Vergleich zu anderen Bauformen, wie beispielsweise Flachwickel und rechteckige Schichtkondensatoren negativ beeinträchtigt.

Allgemein werden Flachwickelkondensatoren als Bestandteil einer Kondensatorbaugruppe bevorzugt. Bei einer Packung von Rundwickelkondensatoren in einer Kondensatorbaugruppe entstehen aufgrund der kreisförmigen Grundfläche der Rundwickelkondensatoren ungenutzte Hohlräume, da sich nebeneinander angeordnete Rundwickelkondensatoren nur entlang einer Linie berühren. Im Gegensatz dazu erlauben Flachwickelkondensatoren aufgrund ihrer Bauform jedoch eine raumeffizientere Packungsweise in einer Baugruppe, da einzelne Kondensatoren dichter gepackt und ungenutzte Hohlräume reduziert werden können. Ein üblicher Flachwickelkondensator weist jedoch keine für die Leitungsführung geeigneten Öffnungen oder Durchführungen auf, sodass eine nachteilhafte, geometrisch bedingte Leitungsführung um den Flachwickelkondensator herum nicht vermieden werden kann. Diese Einschränkung ist im Herstellungsprozess der Flachwickelkondensatoren begründet, der in einem ersten Schritt vorsieht, dass Dielektrikumsfolien auf einen Wickeldorn gewickelt werden, wodurch zunächst ein Rundwickel erhalten wird. Anschließend kann der Wickeldorn aus dem Zentrum des Rundwickels entfernt bzw. die durch Wickeln der Dielektrikumsfolien entstandene Wicklung von dem Wickeldorn abgezogen werden. Bei der Verwendung eines flexiblen Kernrohrs als Wickelkern kann das Kernrohr auch im Zentrum des Rundwickels verbleiben. Der Rundwickel wird anschließend unter Druck verformt bzw. flachgepresst. Dabei wird jegliche Öffnung, die entweder durch Entfernen des Wickelkerns entsteht oder durch das flexible Kernrohr gebildet ist, durch den Verformungsschritt vollständig zusammengepresst und geschlossen, sodass anschließend keine Öffnung für eine Leitungsführung mehr vorhanden ist.

Dokument DE 10 2013 216941 A1 offenbart ein Folienkondensator nach dem Oberbegriff des Anspruchs 1

Es ist daher eine Aufgabe der vorliegenden Erfindung, parasitäre Induktivitäten bei Folienkondensatoren, insbesondere Flachwickelkondensatoren kosteneffizient und auf einfach Weise zu reduzieren ohne den konstruktiven Aufwand und den Nachteil geringerer Packungsdichte wie bei Rundwickelkondensatoren in Kauf zu nehmen. Entsprechend ist es auch die Aufgabe der vorliegenden Erfindung Kondensatorbaugruppen aus Folienkondensatoren bereitzustellen, bei denen die Induktivitätsverluste und Wärmeverluste gering gehalten werden.

Diese Aufgabe wird durch die unabhängigen Patentansprüche gelöst. Vorteilhafte Ausgestaltungen sind in den abhängigen Patentansprüchen definiert.

Ein erfindungsgemäßer Folienkondensator weist eine erste elektrisch leitfähige Schicht, die auf einer ersten Stirnseitenfläche des Folienkondensators angeordnet ist, wobei die Flächennormale der ersten elektrisch leitfähigen Schicht senkrecht zu den Oberflächennormalen der Dielektrikumsfolien des Folienkondensators ist, und eine zweite elektrisch leitfähige Schicht auf, die auf einer der ersten Stirnseitenfläche gegenüberliegenden, zweiten Stirnseitenfläche angeordnet ist, wobei die Flächennormale der zweiten elektrisch leitfähigen Schicht senkrecht zu den Oberflächennormalen der Dielektrikumsfolien des Folienkondensators ist, wobei der Folienkondensator mindestens einen inneren Durchgang aufweist, der sich von der ersten elektrisch leitfähigen Schicht zur zweiten elektrisch leitfähigen Schicht erstreckt, wobei der Durchgang durch Entfernen von Kondensatormaterial gebildet ist. Entgegen dem gängigen Wissen und der gängigen Praxis führt ein solcher Durchgang, der durch Entfernen von Kondensatormaterial, zum Beispiel Teilen der Dielektrikumsfolien des Folienkondensators und (falls vorhanden) Teilen eines flexiblen Kernrohrs, das als Wickelkern diente, gebildet ist, nicht zu nachteiligen Auswirkungen auf den Kondensator. So kommt es weder zu einer Zerstörung noch zu Qualitätseinbußen bei dem erfindungsgemäßen Kondensator. Lediglich eine Verringerung der Kapazität von wenigen Prozent der ursprünglichen Kapazität konnte festgestellt werden. Dieser leicht nachteilige Effekt kann jedoch durch eine Kapazitätszugabe durch mehr Folienmaterial während der Herstellung kompensiert werden. Ein solcher Durchgang durch den Folienkondensator ermöglicht die Verwendung einer Verbindungsleitung, die sich durch den Durchgang erstreckt, um die erste oder zweite elektrisch leitfähige Schicht des Kondensators zu kontaktieren. Auf diese Weise werden Leitungswege vermieden, die außen um den Kondensator herum angeordnet sein müssen. Dies führt einerseits zu einer Ersparnis von Leitungsmaterial, andererseits insbesondere aber auch zu einer deutlichen Reduzierung parasitärer Induktivitäten.

Gemäß einer vorteilhaften Ausgestaltung kann der erfindungsgemäße Folienkondensator ein Flachwickel- oder ein Schichtkondensator sein, was zu den entsprechenden Vorteilen bei der Packungsdichte bei Kondensatorbaugruppen führt.

Gemäß einer weiteren vorteilhaften Ausgestaltung kann der Durchgang eine Bohrung sein und somit einfach durchgeführt werden, nachdem der eigentliche Folienkondensators auf herkömmliche Weise hergestellt worden ist.

Gemäß einer weiteren vorteilhaften Ausgestaltung kann sich der Durchgang in einer im Wesentlichen senkrechten Richtung in Bezug auf die Stirnflächen des Folienkondensators erstrecken. Ferner kann der Durchgang in verschiedenen Bereichen platziert und unterschiedlich dimensioniert sein. Dies ermöglicht eine Anpassung des Durchgangs an entsprechende Anforderungen an, unter anderem, die Dimensionierung der Verbindungsleitung.

Gemäß einer weiteren vorteilhaften Ausgestaltung können die elektrisch leitfähigen Schichten als Schoopschichten ausgebildet sein. Die elektrisch leitfähigen Schichten ermöglichen eine elektrische Kontaktierung des erfindungsgemäßen Folienkondensators.

Gemäß einer weiteren vorteilhaften Ausgestaltung können die Dielektrikumsfolien des Folienkondensators Kunststofffolien aus beispielsweise Polyester (PET), Polyethylennaphthalat (PEN), Polyphenylensulfid (PPS), Polypropylen (PP), Polytetrafluorethylen (PTFE), Polystyrol (PS), Polycarbonat (PC), oder ähnlichen Kunststoffen umfassen. Alle für einen Folienkondensator geeigneten Materialien sind hier vorstellbar. Die Dielektrikumsfolien können ganz oder teilweise oder gar nicht metallisiert sein.

In vorteilhafterweise Weise kann eine Kondensatorbaugruppe einen erfindungsgemäßen Folienkondensator umfassen, wobei eine elektrisch leitfähige Verbindung von der ersten oder der zweiten elektrisch leitfähigen Schicht auf der einen Stirnseitenfläche des Folienkondensators durch den Durchgang hindurch zur jeweilig anderen Stirnseitenfläche des Folienkondensators geführt ist.

Bei einer solchen Kondensatorbaugruppe kann in vorteilhafter Weise ein erstes Anschlusselement mit der ersten oder der zweiten elektrisch leitfähigen Schicht des Folienkondensators verbunden sein, wobei ein zweites Anschlusselement mit der jeweils anderen elektrisch leitfähigen Schicht über die elektrisch leitfähige Verbindung verbunden ist, die durch den Durchgang hindurch geführt ist. Das erste und das zweite Anschlusselement sind voneinander elektrisch isoliert nebeneinander oder übereinander auf der Stirnseitenfläche des Folienkondensators angeordnet, die der elektrisch leitfähigen Schicht gegenüber liegt, die mit der elektrisch leitfähigen Verbindung verbunden ist. Hierdurch können alle Anschlusselemente auf nur einer Stirnseite des Folienkondensators angeordnet werden.

Eine solche Kondensatorbaugruppe ist in mehreren Hinsichten vorteilhaft. Dadurch, dass das erste Anschlusselement und das zweite Anschlusselement mit jeweils entgegengesetzter Polung an derselben Stirnseite des Folienkondensators (oder denselben Stirnseiten von mehreren Folienkondensatoren) isoliert und nahe beieinander angeordnet sind, kompensieren sich die in den Anschlusselementen erzeugten Magnetfelder gegenseitig nahezu. Gleichzeitig werden parasitäre Induktivitäten dadurch reduziert, dass keine L- oder U- förmigen oder schlaufenähnlich geformten Anschlusselemente (ohne Gegenpol) mit einer Polarität zur Kontaktierung des einen oder der mehreren Folienkondensator verwendet werden. Zudem ist auch die Anordnung von jeweils zwei Anschlusselementen mit entgegengesetzter Polung an jeder Stirnseite für jede leitfähige Schicht, damit sich die parasitären Induktivitäten der Anschlusselemente an jeder Stirnseite gegenseitig kompensieren, nicht erforderlich. Daher kann die erfindungsgemäße Kondensatorbaugruppe kompakter und kosteneffizienter hergestellt werden. Dadurch, dass die Anschlusselemente den einen oder die mehreren Folienkondensatoren nur noch auf einer der Stirnseiten bedecken, kann die Kondensatorbaugruppe deutlich effizienter und gleichmäßiger gekühlt werden, da der Großteil der Leitungsführung auf nur einer Seite bereitsteht und eine erhöhte Anzahl an Anschlusselementen zum ganzheitlichen Kühlen möglich ist.

Mehrerer solcher Kondensatorbaugruppen können in vorteilhafter Weise über mehrere Anschlusselemente seriell oder parallel miteinander kontaktiert werden, wobei alle Anschlusselemente voneinander elektrisch isoliert nebeneinander oder übereinander auf den Stirnseitenflächen der Folienkondensatoren der Kondensatorbaugruppen angeordnet sind, die den elektrisch leitfähigen Schichten der Folienkondensatoren gegenüber liegen, die mit elektrisch leitfähigen Verbindungen kontaktiert sind.

Eine weitere erfindungsgemäße Kondensatorbaugruppe umfasst mehrere Kondensatorbaugruppen aus einzelnen erfindungsgemäßen Folienkondensatoren, die nebeneinander angeordnet sind, wobei ein erstes Anschlusselement mit jeweils der ersten elektrisch leitfähigen Schicht und/oder der zweiten elektrisch leitfähigen Schicht der Folienkondensatoren der Kondensatorbaugruppen verbunden ist, und wobei ein zweites Anschlusselement mit jeweils der ersten elektrisch leitfähigen Schicht und/oder der zweiten elektrisch leitfähigen Schicht der Folienkondensatoren der Kondensatorbaugruppen, die jeweils gegenpolig zu den ersten und zweiten elektrisch leitfähigen Schichten sind, die mit dem ersten Anschlusselement verbunden sind, verbunden ist. Das erste und das zweite Anschlusselement sind voneinander elektrisch isoliert nebeneinander oder übereinander auf derselben Stirnseitenfläche des Folienkondensators angeordnet, die der elektrisch leitfähigen Schicht gegenüber liegt, die mit der elektrisch leitfähigen Verbindung verbunden ist, wobei die Verbindung des ersten und zweiten Anschlusselements mit den jeweiligen ersten und zweiten elektrisch leitfähigen Schichten jeweils entweder direkt oder über eine elektrisch leitfähige Verbindung, die durch einen Durchgang des jeweiligen Folienkondensators hindurch geführt ist, erfolgt.

Gemäß einer bevorzugten Ausführungsform kann über einer Kondensatorbaugruppe aus nebeneinander angeordneten Kondensatorbaugruppen wie oben beschrieben, eine weitere Schicht von nebeneinander angeordneten Kondensatorbaugruppen angeordnet sein, deren erste und zweite elektrisch leitfähige Schichten jeweils entsprechend das erste Anschlusselement und das zweite Anschlusselement der darunterliegenden Kondensatorbaugruppe kontaktieren, um eine Parallelschaltung der Folienkondensatoren zu bilden.

Bei einer weiteren vorteilhaften Ausgestaltung umfasst eine Kondensatorbaugruppe mehrere Kondensatorunterbaugruppen, wobei die Kondensatorunterbaugruppen jeweils eine Kondensatorbaugruppe mit einem einzelnen Folienkondensator oder eine Kondensatorbaugruppe mit mehreren parallel geschalteten Folienkondensatoren umfassen, wobei die Kondensatorunterbaugruppen mittels eines dritten Anschlusselements in Reihe geschaltet sind, wobei das erste, das zweite und das dritte Anschlusselement voneinander elektrisch isoliert nebeneinander oder übereinander auf derselben Stirnseitenfläche des Folienkondensators angeordnet sind, die der elektrisch leitfähigen Schicht gegenüber liegt, die mit der elektrisch leitfähigen Verbindung verbunden ist.

Ein Verfahren zur Herstellung des erfindungsgemäßen Folienkondensators umfasst einen Schritt zum Herstellen des Durchgangs bei einem durch bekannte Verfahren hergestellten Folienkondensator, bei dem Kondensatormaterial entfernt wird.

Der Schritt zum Herstellen des Durchgangs erfolgt dabei erst nach der Herstellung der jeweiligen Bauform. So kann in einem ersten Herstellungsschritt der Kondensator der jeweiligen gewünschten Bauform auf herkömmliche Weise hergestellt werden. Nachdem der Kondensator in der gewünschten jeweiligen Bauform hergestellt wurde, kann der Durchgang anschließend ausgeführt werden.

Gemäß einer vorteilhaften Ausgestaltung kann der Schritt zum Herstellen des Durchgangs einen Bohrvorgang mittels eines Schnittbohrers umfassen. Alternativ kann auch jeder andere geeignete Prozess zum Entfernen von Kondensatormaterial bzw. Teilen der Dielektrikumsfolien verwendet werden.

Gemäß einer weiteren vorteilhaften Ausgestaltung kann beispielsweise der Vorschub des Schnittbohrers durchgehend oder oszillierend durchgeführt werden. Dies bedeutet, dass der Bohrvorgang mit einem kontinuierlichen Vorschub und/oder wiederholt zeitweiliger Vorschubumkehr durchgeführt werden kann.

Eine weitere bevorzugte Kondensatorbaugruppe zur parallelen Verschaltung von Unterbaugruppen umfasst eine erste Unterbaugruppe, die mindestens einen Folienkondensator umfasst, der eine erste elektrisch leitfähige Schicht aufweist, die auf einer ersten Stirnseitenfläche des Folienkondensators angeordnet ist, wobei die Flächennormale der ersten elektrisch leitfähigen Schicht senkrecht zu den Oberflächennormalen der Folien des Folienkondensators ist, und eine zweite elektrisch leitfähige Schicht, die auf einer der ersten Stirnseitenfläche gegenüberliegenden, zweiten Stirnseitenfläche des Folienkondensators parallel zur ersten elektrisch leitfähigen Schicht angeordnet ist. Ein erstes Anschlusselement kontaktiert jeweils die erste elektrisch leitfähige Schicht des mindestens einen Folienkondensators der ersten Unterbaugruppe. Eine über der ersten Unterbaugruppe angeordnete zweite Unterbaugruppe umfasst mindestens einen Folienkondensator aufweisend eine erste elektrisch leitfähige Schicht, die auf einer ersten Stirnseitenfläche des Folienkondensators angeordnet ist, wobei die Flächennormale der ersten elektrisch leitfähigen Schicht senkrecht zu den Oberflächennormalen der Folien des Folienkondensators ist, und eine zweite elektrisch leitfähige Schicht, die auf einer der ersten Stirnseitenfläche gegenüberliegenden, zweiten Stirnseitenfläche des Folienkondensators parallel zur ersten elektrisch leitfähigen Schicht angeordnet ist. Ein zweites Anschlusselement kontaktiert jeweils die zweite elektrisch leitfähige Schicht des mindestens einen Folienkondensators der zweiten Unterbaugruppe. Das erste Anschlusselement kontaktiert jeweils die erste elektrisch leitfähige Schicht des mindestens einen Folienkondensators der zweiten Unterbaugruppe über mindestens eine erste Verbindungsleitung und das zweite Anschlusselement kontaktiert jeweils die zweite elektrische leitfähige Schicht des mindestens einen Folienkondensators der ersten Unterbaugruppe über mindestens eine zweite Verbindungsleitung.

Ein Vorteil einer solchen Kondensatorbaugruppe mit zwei übereinander angeordneten Kondensatorlagen aus Folienkondensatoren mit jeweils halber Wickelhöhe h/2 im Vergleich zu einer einzigen Lage aus großen Folienkondensatoren mit einer Wickelhöhe h liegt in einer stark verringerten Niederinduktivität und einer geringeren im Betrieb erzeugten Verlustwärme.

Bevorzugt weisen der mindestens eine Folienkondensator der ersten und der zweiten Unterbaugruppe jeweils mindestens einen inneren Durchgang auf, der sich von der jeweils ersten elektrisch leitfähigen Schicht zu der der jeweils zweiten elektrisch leitfähigen Schicht erstreckt und die mindestens eine erste Verbindungsleitung und die mindestens eine zweite Verbindungsleitung erstreckt sich durch den jeweiligen inneren Durchgang.

Das erste Anschlusselement und/oder das zweite Anschlusselement sind bevorzugt zumindest teilweise zwischen der ersten Unterbaugruppe und der zweiten Unterbaugruppe angeordnet.

Bei der oben beschriebenen Kondensatorbaugruppe weist bevorzugt das erste Anschlusselement Aussparungen zum Durchführen der mindestens einen zweiten Verbindungsleitung des zweiten Anschlusselements auf und das zweite Anschlusselement weist Aussparungen zum Durchführen der mindestens einen ersten Verbindungsleitung des ersten Anschlusselements auf.

Eine weitere bevorzugte Kondensatorbaugruppe zur seriellen Verschaltung von Unterbaugruppen umfasst eine erste Unterbaugruppe, die mindestens einen Folienkondensator umfasst, der eine erste elektrisch leitfähige Schicht aufweist, die auf einer ersten Stirnseitenfläche des Folienkondensators angeordnet ist, wobei die Flächennormale der ersten elektrisch leitfähigen Schicht senkrecht zu den Oberflächennormalen der Folien des Folienkondensators ist, und eine zweite elektrisch leitfähige Schicht, die auf einer der ersten Stirnseitenfläche gegenüberliegenden, zweiten Stirnseitenfläche des Folienkondensators parallel zur ersten elektrisch leitfähigen Schicht angeordnet ist. Ein erstes Anschlusselement kontaktiert jeweils die erste elektrisch leitfähige Schicht des mindestens einen Folienkondensators der ersten Unterbaugruppe. Eine über der ersten Unterbaugruppe angeordnete zweite Unterbaugruppe umfasst mindestens einen Folienkondensator aufweisend eine erste elektrisch leitfähige Schicht, die auf einer ersten Stirnseitenfläche des Folienkondensators angeordnet ist, wobei die Flächennormale der ersten elektrisch leitfähigen Schicht senkrecht zu den Oberflächennormalen der Folien des Folienkondensators ist, und eine zweite elektrisch leitfähige Schicht, die auf einer der ersten Stirnseitenfläche gegenüberliegenden, zweiten Stirnseitenfläche des Folienkondensators parallel zur ersten elektrisch leitfähigen Schicht angeordnet ist. Ein zweites Anschlusselement kontaktiert jeweils die zweite elektrisch leitfähige Schicht des mindestens einen Folienkondensators der zweiten Unterbaugruppe. Ein drittes Anschlusselement umfasst mindestes eine erste Verbindungsleitung und mindestens eine zweite Verbindungsleitung, wobei die mindestens eine erste Verbindungsleitung des dritten Anschlusselements die jeweils zweite elektrisch leitfähige Schicht des mindestens einen Folienkondensators der ersten Unterbaugruppe kontaktiert, und wobei die mindestens eine zweite Verbindungsleitung des dritten Anschlusselements die jeweils erste elektrisch leitfähige Schicht des mindestens einen Folienkondensators der zweiten Unterbaugruppe kontaktiert.

Auch bei einer solchen seriell geschalteten Kondensatorbaugruppe mit zwei übereinander angeordneten Kondensatorlagen aus Folienkondensatoren mit jeweils halber Wickelhöhe h/2 im Vergleich zu einer einzigen Lage aus großen Folienkondensatoren mit einer Wickelhöhe h liegt der Vorteil in einer stark verringerten Niederinduktivität und einer geringeren im Betrieb erzeugten Verlustwärme.

Bevorzugt kann der mindestens eine Folienkondensator der ersten und der zweiten Unterbaugruppe jeweils mindestens einen inneren Durchgang aufweisen, der sich von der jeweils ersten elektrisch leitfähigen Schicht zu der der jeweils zweiten elektrisch leitfähigen Schicht erstreckt, und die mindestens eine erste Verbindungsleitung des dritten Anschlusselements und die mindestens eine zweite Verbindungsleitung des dritten Anschlusselements erstrecken sich durch den jeweiligen inneren Durchgang des Folienkondensators.

Vorzugsweise sind das erste Anschlusselement und/oder das zweite Anschlusselement und/oder das dritte Anschlusselement zumindest teilweise zwischen der ersten Unterbaugruppe und der zweiten Unterbaugruppe angeordnet.

Weiter vorzugsweise weist das erste Anschlusselement Aussparungen zum Durchführen der mindestens einen ersten Verbindungsleitung des dritten Anschlusselements auf und das zweite Anschlusselement weist Aussparungen zum Durchführen der mindestens einen zweiten Verbindungsleitung des dritten Anschlusselements auf.

In vorteilhafter Weise können die Anschlusselemente jeweils als Leiter, Draht, Flachdraht, Gitter, Anschlussblech oder Busbar ausgestaltet sein.

Weitere Einzelheiten, Merkmale und Vorteile der Erfindung ergeben sich aus der nachfolgenden Beschreibung und den Figuren, in denen
- **Fig. 1A**: beispielhaft eine Schrägansicht eines Folienkondensators gemäß dem Stand der Technik zeigt, der in Form eines Schichtkondensators ausgebildet ist;
- **Fig. 1B**: beispielhaft eine Schrägansicht eines Folienkondensator gemäß dem Stand der Technik zeigt, der in Form eines Flachwickels ausgebildet ist;
- **Fig. 2A**: beispielhaft eine perspektivische Ansicht einer Kondensatorbaugruppe gemäß dem Stand der Technik zeigt;
- **Fig. 2B**: beispielhaft eine Seitenansicht der Kondensatorbaugruppe aus Fig. 2A zeigt;
- **Fig. 3A**: eine Schrägansicht eines erfindungsgemäßen Folienkondensators in Form eines Schichtkondensators gemäß eines Ausführungsbeispiels zeigt;
- **Fig. 3B**: eine Schrägansicht eines erfindungsgemäßen Folienkondensators in Form eines Flachwickels gemäß eines Ausführungsbeispiels zeigt;
- **Fig. 3C**: einen Querschnitt eines erfindungsgemäßen Folienkondensators gemäß eines Ausführungsbeispiels zeigt;
- **Fig. 4A**: eine perspektivische Ansicht einer erfindungsgemäßen Kondensatorbaugruppe gemäß eines Ausführungsbeispiels zeigt;
- **Fig. 4B**: einen Querschnitt der Kondensatorbaugruppe aus Fig. 4A zeigt;
- **Fig. 5**: beispielhaft eine perspektivische Ansicht einer Kondensatorbaugruppe gemäß dem Stand der Technik mit parallelen Verschaltungen über Busbars zeigt;
- **Fig. 6A**: zwei übereinander angeordnete Kondensatorbaugruppen mit parallelen Verschaltungen gemäß der Erfindung zeigt;
- **Fig. 6B**: Einzelheiten der erfindungsgemäßen parallelen Verschaltungen von zwei übereinander angeordneten Kondensatorbaugruppen zeigen;
- **Fig. 7A**: eine erfindungsgemäße Kondensatorbaugruppe gemäß eines weiteren Ausführungsbeispiels zeigt; und
- **Fig. 7B**: einen Querschnitt der erfindungsgemäßen Kondensatorbaugruppe gemäß Fig. 7A zeigt.
- **Fig. 8**: beispielhaft eine perspektivische Ansicht einer Kondensatorbaugruppe gemäß dem Stand der Technik mit seriellen Verschaltungen über Busbars zeigt;
- **Fig. 9A**: zwei übereinander angeordnete Kondensatorbaugruppen mit seriellen Verschaltungen gemäß der Erfindung zeigt;
- **Fig. 9B und 9C**: Einzelheiten der erfindungsgemäßen seriellen Verschaltungen von zwei übereinander angeordneten Kondensatorbaugruppen zeigen;

In den Figuren sind gleiche bzw. funktionsgleiche Bauteil mit denselben Bezugszeichen versehen.

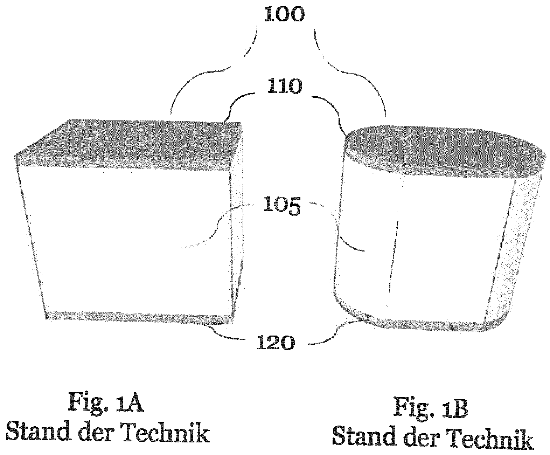

Fig. 1A zeigt beispielhaft eine Schrägansicht eines Folienkondensators 100 des Standes der Technik, der in Form eines Schichtkondensators ausgebildet ist. Der gezeigte Kondensator 100 weist Dielektrikumsfolien 105 auf, die übereinandergeschichtet angeordnet sind. Der so entstandene Schichtkondensator weist jeweils eine erste und zweite Stirnseitenflächenfläche auf, auf deren Oberflächen entsprechend jeweils eine erste elektrisch leitfähige Schicht 110 und eine zweite elektrisch leitfähige Schicht 120 angeordnet sind. Die elektrisch leitfähigen Schichten sind dabei so angeordnet, dass ihre Flächennormalen senkrecht zu den Flächennormalen der übereinandergeschichteten Dielektrikumsfolien des Kondensators sind. Die elektrisch leitfähigen Schichten dienen als Kontaktfläche zum elektrischen Kontaktieren des Kondensators. Die elektrisch leitfähigen Schichten können auch als Schoopschichten ausgebildet sein.

Fig. 1B zeigt beispielhaft eine Schrägansicht eines Folienkondensators 100 des Standes der Technik, der in der Form eines Flachwickelkondensators ausgeführt ist. Der Kondensator 100 weist Dielektrikumsfolien 105 auf. Diese werden bei der Herstellung um einen Wickeldorn gewickelt, sodass ein Folienkondensator in der Form eines Rundwickelkondensators entsteht. Um die Form eines Flachwickelkondensators zu erreichen, wird der Wickeldorn anschließend entfernt bzw. die durch Wickeln der Dielektrikumsfolien 105 entstandene Wicklung wird von dem Wickeldorn abgezogen und anschließend wird die Wicklung unter Druckeinwirkung geplättet und in eine ovale Form gebracht, sodass aus der Form eines Rundwickelkondensators die in Fig. 1B dargestellte Form eines Flachwickelkondensators erzeugt wird. Der zuvor durch den Wickelkern eingenommene Hohlraum verschwindet dabei vollständig durch die Verformung unter Druckeinwirkung. Der so entstandene Folienkondensator weist jeweils eine erste und zweite Stirnseitenflächenfläche auf, auf deren Oberflächen entsprechend jeweils eine erste elektrisch leitfähige Schicht 110 und eine zweite elektrisch leitfähige Schicht 120 aufgebracht sind. Die elektrisch leitfähigen Schichten sind dabei so angeordnet, dass ihre Flächennormalen senkrecht zu den Flächennormalen der gewickelten Dielektrikumsfolien des Kondensators sind. Die elektrisch leitfähigen Schichten dienen als Kontaktfläche zum elektrischen Kontaktieren des Kondensators. Die elektrisch leitfähigen Schichten können als Schoopschichten ausgebildet sein.

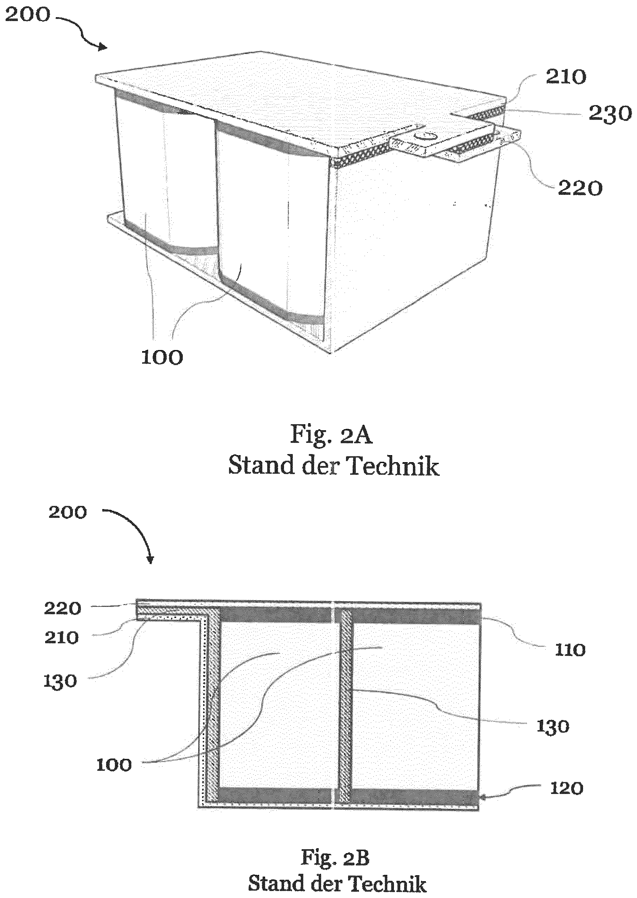

Fig. 2A und 2B zeigen beispielhaft jeweils eine perspektivische Ansicht und eine Seitenansicht einer Kondensatorbaugruppe 200 des Standes der Technik. Dargestellt ist hierbei eine Baugruppe, die vier einzelne Kondensatoren 100 umfasst. Die in Fig. 2A beispielhaft gezeigte Darstellung einer Kondensatorbaugruppe kann aber ohne Weiteres auf eine Baugruppe übertragen werden, die mehr oder weniger als die dargestellte Anzahl einzelner Kondensatoren umfasst. Die einzelnen Kondensatoren 100 können hierbei Kondensatoren sein, wie sie beispielsweise in Zusammenhang mit den Fig. 1A und Fig. 1B beschrieben wurden. Um die einzelnen Kondensatoren zu einer Baugruppe elektrisch zu verbinden, wird ein erstes Anschlussblech 210 eingesetzt, das auf der oberen Seite der Baugruppe angeordnet sein kann und jeweils die ersten elektrisch leitfähigen Schichten 110 der einzelnen Kondensatoren kontaktiert. Ein zweites Anschlussblech 220 kann auf der unteren Seite und einer lateralen Seite der Baugruppe angeordnet sein. Das zweite Anschlussblech 220 kann eine L-Form aufweisen. Das zweite Anschlussblech 220 kontaktiert jeweils die zweiten elektrisch leitfähigen Schichten 120 der einzelnen Kondensatoren. An entsprechenden Abschnitten des ersten Anschlussblechs 210 und des zweiten Anschlussblechs 220 sind das erste Anschlussblech 210 und das zweite Anschlussblech 220 durch eine Isolierschicht 230 elektrisch voneinander isoliert, so dass die Kondensatoren parallel miteinander verschaltet sind. Die L-Form des zweiten Anschlussblechs 220 wirkt sich jedoch ungünstig auf die parasitäre Induktivität auf, da die L-Form eine teilweise Schlaufenform darstellt und somit eine nicht zu vernachlässigende Eigeninduktivität aufweist, die sich insbesondere bei hohen Frequenzen nachteilig auswirkt.

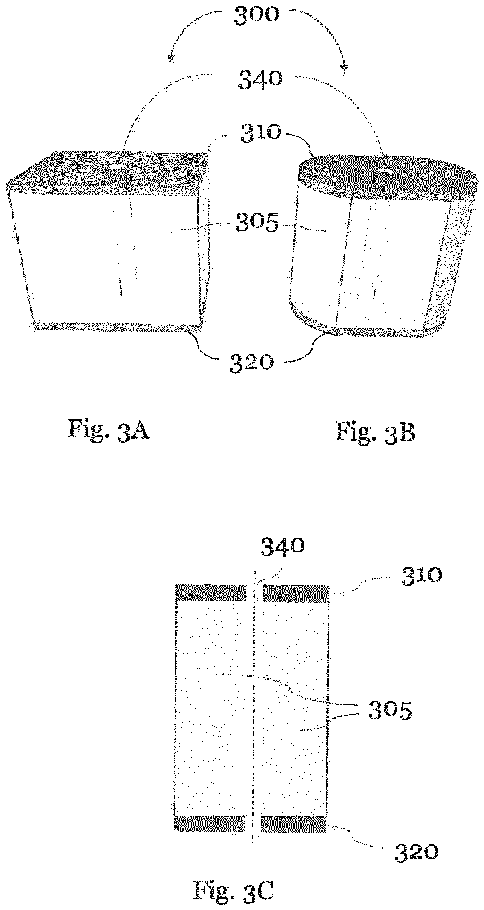

Fig. 3A zeigt eine Schrägansicht eines erfindungsgemäßen Folienkondensators 300 in Form eines Schichtkondensators gemäß eines Ausführungsbeispiels, dessen Grundform wie oben bezüglich Fig. 1A beschrieben aufgebaut ist. Der gezeigte Kondensator 300 ist aus Dielektrikumsfolien 305 aufgebaut, die übereinandergeschichtet angeordnet sind und ganz, teilweise oder gar nicht metallisiert sein können. Die Dielektrikumsfolien können beispielsweise Kunststofffolien aus einem geeigneten dielektrischen Material umfassen, wobei als dielektrisches Material für die Kunststofffolien entsprechend der gewünschten Betriebsparameter des Kondensators beispielsweise Polyester (PET), Polyethylennaphthalat (PEN), Polyphenylensulfid (PPS), Polypropylen (PP), Polytetrafluorethylen (PTFE), Polystyrol (PS), Polycarbonat (PC) oder ähnliche Kunststoffmaterialien gewählt werden können. Auch entsprechend geeignete Papiere können als Dielektrikumsfolien in Frage kommen.

Der Schichtkondensator weist jeweils eine erste und eine zweite Stirnseitenfläche auf, auf deren Oberflächen entsprechend jeweils eine erste elektrisch leitfähige Schicht 310 und eine zweite elektrisch leitfähige Schicht 320 angeordnet sind. Die elektrisch leitfähigen Schichten 310 und 320 sind so angeordnet, dass ihre Flächennormalen senkrecht zu den Flächennormalen der übereinandergeschichteten Dielektrikumsfolien des Kondensators sind. Die elektrisch leitfähigen Schichten 310 und 320 dienen als Kontaktflächen zum elektrischen Kontaktieren des Kondensators. Die elektrisch leitfähigen Schichten 310 und 320 können auch als Schoopschichten ausgebildet sein.

Fig. 3B zeigt eine Schrägansicht eines erfindungsgemäßen Folienkondensators 300 in Form eines Flachwickelkondensators gemäß eines bevorzugten Ausführungsbeispiels, dessen Grundform wie oben bezüglich Fig. 1B beschrieben aufgebaut ist. Der gezeigte Kondensator 300 ist aus Dielektrikumsfolien 305 aufgebaut, die ganz, teilweise oder gar nicht metallisiert sein können. Wie bei dem in Fig. 3A gezeigten Folienkondensator können die Dielektrikumsfolien beispielsweise Kunststofffolien aus einem geeigneten dielektrischen Material umfassen, wobei als dielektrisches Material für die Kunststofffolien entsprechend der gewünschten Betriebsparameter des Kondensators beispielsweise Polyester (PET), Polyethylennaphthalat (PEN), Polyphenylensulfid (PPS), Polypropylen (PP), Polytetrafluorethylen (PTFE), Polystyrol (PS), Polycarbonat (PC) oder ähnliche Kunststoffmaterialien gewählt werden können. Auch entsprechend geeignete Papiere können als Dielektrikumsfolien in Frage kommen.

Der Wickelkondensator weist jeweils eine erste und eine zweite Stirnseitenfläche auf, auf deren Oberflächen entsprechend jeweils eine erste elektrisch leitfähige Schicht 310 und eine zweite elektrisch leitfähige Schicht 320 angeordnet ist. Die elektrisch leitfähigen Schichten 310 und 320 sind so angeordnet, dass ihre Flächennormalen senkrecht zu den Flächennormalen der gewickelten Dielektrikumsfolien des Kondensators sind. Die elektrisch leitfähigen Schichten 310 und 320 dienen als Kontaktfläche zum elektrischen Kontaktieren des Kondensators 300. Die elektrisch leitfähigen Schichten 310 und 320 können als Schoopschichten ausgebildet sein.

Im Unterschied zu den in Fig. 1A und 1B beispielhaft dargestellten Kondensatoren des Standes der Technik weist der erfindungsgemäße Folienkondensator 300 in den Figuren 3A (Schichtkondensator) und 3B (Flachwickelkondensator) einen Durchgang 340 auf, der sich von der Außenfläche der ersten elektrisch leitfähigen Schicht 310 zu der Außenfläche der zweiten elektrisch leitfähigen Schicht 320 erstreckt. Dieser Durchgang 340 ist durch Entfernen von Kondensatormaterial, zum Beispiel von Teilen der Dielektrikumsfolien des Folienkondensators und (falls vorhanden) Teilen eines flexiblen Kernrohrs, das als Wickelkern diente, gebildet. Der Durchgang 340 kann sich dabei in im Wesentlichen senkrechter Richtung oder in einem Winkel zu den elektrisch leitfähigen Schichten erstrecken. Dabei kann der Durchgang 340 eine gleichmäßig geformte oder eine in unterschiedlichen Abschnitten des Durchgangs 340 unterschiedliche dimensionierte Mantelfläche aufweisen. Die Grundrissfläche des Durchgangs 340 kann eine kreisförmige oder eine elliptische Fläche aufweisen. Die Grundrissfläche kann im Allgemeinen aber jede beliebige Flächenform aufweisen, beispielsweise die Form eines Polygons. Der Durchgang 340 kann in der ersten, der zweiten, oder in der ersten und zweiten elektrisch leitfähigen Schicht mittig angeordnet sein. Der Durchgang 340 kann aber auch in der ersten, der zweiten oder in der ersten und zweiten elektrisch leitfähigen Schicht 310 und 320 abseits der Mitte der jeweils ersten und zweiten elektrisch leitfähigen Schicht 310 und 320 angeordnet sein.

Fig. 3C zeigt einen Querschnitt eines erfindungsgemäßen Folienkondensators 300 gemäß eines bevorzugten Ausführungsbeispiels. Der gezeigte Kondensator weist Dielektrikumsfolien 305 auf, die gewickelt oder geschichtet sein können. Die Dielektrikumsfolien können Folien aus dielektrischem Material wie oben bezüglich der Fig. 3A und 3B dargestellt umfassen.

An den Stirnseiten sind jeweils eine erste elektrisch leitfähige Schicht 310 und auf der gegenüberliegenden Seite eine zweite elektrisch leitfähige Schicht 320 angeordnet. Des Weiteren ist ein Durchgang 340 ausgeführt, der sich von der Außenfläche der ersten elektrisch leitfähigen Schicht 310 zur Außenfläche der zweiten elektrisch leitfähigen Schicht 320 erstreckt. Dieser Durchgang 340 kann durch Entfernen von Kondensatormaterial, zum Beispiel von Teilen der Dielektrikumsfolien des Folienkondensators und (falls vorhanden) Teilen eines flexiblen Kernrohrs, das als Wickelkern diente, gebildet sein. Die einzelnen Elemente und Bauteile des Kondensators können hierbei so angeordnet und ausgebildet sein, wie es beispielsweise in Zusammenhang mit den Fig. 3A und 3B beschrieben wurde.

Die elektrisch leitfähigen Schichten 310, 320 der Folienkondensatoren sind dazu geeignet elektrisch mit Anschlusselementen verbunden zu werden. Über diese Anschlusselemente können die Folienkondensatoren durch Löten oder Schweißen bzw. jede andere geeignete Verbindungsart elektrisch beispielsweise mit einer Leiterplatte verbunden werden.

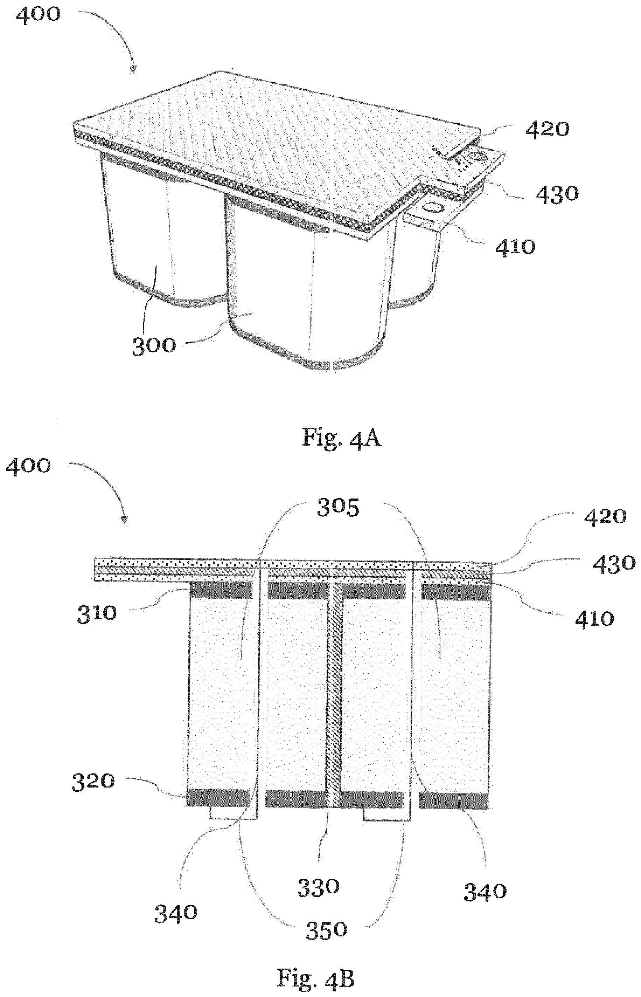

Der oben beschriebene erfindungsgemäße Durchgang 340 durch den Folienkondensator ermöglicht die Verwendung einer elektrischen Verbindungsleitung 350 (s. bspw. Fig. 4B), die sich von der ersten 310 oder zweiten 320 elektrisch leitfähigen Schicht auf der einen Stirnseite des Kondensators 300 durch den Durchgang 340 zur jeweils anderen Stirnseite erstreckt. Dort wird die elektrische Verbindungsleitung 350 mit einem Anschlusselement verbunden, so dass die jeweiligen Anschlusselemente für die beiden elektrisch leitfähigen Schichten bzw. Anschlusspole des Kondensators auf nur einer Seite des Kondensators angeordnet sein können. Auf diese Weise werden Leitungswege vermieden, die außen um den Kondensator herum angeordnet sein müssen. Dies führt einerseits zu einer Ersparnis von Leitungsmaterial, andererseits insbesondere aber auch zu einer deutlichen Reduzierung parasitärer Induktivitäten. Beliebig viele so gebildete Kondensatorbaugruppen können parallel oder in Reihe und nebeneinander oder übereinander angeordnet werden und somit größere eng gepackte Kondensatorbaugruppen bilden. Ferner können die einzelnen Kondensatoren mit Bezug auf ihre Polarität wechselseitig angeordnet sein. So können benachbarte einzelne Kondensatoren so angeordnet, orientiert und elektrisch kontaktiert sein, dass ein erster Kondensator eine erste Polarität aufweist, und ein zweiter benachbarter Kondensator eine entgegengesetzte Polarität aufweist.

Ein Verfahren zur Herstellung des erfindungsgemäßen Folienkondensators umfasst im Wesentlichen zwei Schritte. In einem ersten Schritt wird ein Folienkondensator in Form eines Flachwickelkondensators oder Schichtkondensators mittels aus dem Stand der Technik bekannter Verfahren hergestellt. Beispielsweise wird zuerst ein Folienkondensator in der Form eines Rundwickels durch Aufrollen von metallisierten Dielektrikumsfolien auf einen Wickeldorn hergestellt. Anschließend wird der Wickeldorn aus dem Zentrum des Rundwickels entfernt bzw. die durch Wickeln der Dielektrikumsfolien entstandene Wicklung wird von dem Wickeldorn abgezogen. Die abgezogene Wicklung wird dann unter Druck verformt bzw. flachgepresst. Die ursprünglich von dem entfernten Wickeldorn hinterlassene Öffnung wird dabei durch den Verformungsschritt vollständig zusammengepresst und geschlossen, sodass keine Öffnung mehr vorhanden ist. Durch die Verformung wird ein Kondensator in der Form eines Flachwickels erhalten. Bei der Verwendung eines flexiblen Kernrohrs als Wickelkern kann das Kernrohr auch im Zentrum des Rundwickels verbleiben. Das flexible Kernrohr wird dann mit der Wicklung zusammengepresst, sodass keine Öffnung mehr vorhanden ist.

Alternativ kann ein Schichtkondensator durch Übereinanderschichten von Dielektrikumsfolien hergestellt werden.

In einem zusätzlichen Schritt wird anschließend der erfindungsgemäße Durchgang erzeugt. Dieser Schritt umfasst dabei das Entfernen von Kondensatormaterial, zum Beispiel von Teilen der Dielektrikumsfolien des Folienkondensators und (falls vorhanden) Teilen eines flexiblen Kernrohrs, das als Wickelkern diente, des im ersten Schritt hergestellten Folienkondensators. Das Entfernen von Kondensatormaterial kann im Allgemeinen unter Verwendung jedes geeigneten Fertigungsverfahrens erfolgen, z.B. durch spanabhebende Verfahren. Bevorzugt kann das Entfernen von Kondensatormaterial mittels eines Bohrvorgangs erfolgen, wobei der Bohrvorgang unter Verwendung eines Schnittbohrers durchgeführt werden kann. Der Schnittbohrer umfasst handelsübliche HSS-Bohrer für die Metall- und Kunststoffverarbeitung. Der Durchgang kann beispielsweise aber auch durch Fräsen oder mit Hilfe eines Lasers hergestellt werden.

Der Bohrvorgang kann unter Verwendung eines oder mehrerer optimierter Parameter erfolgen, wobei der eine oder die mehreren optimierten Parameter eine optimierte Bohrdrehzahl und/oder eine optimierte Vorschubgeschwindigkeit umfassen. Diesbezüglich kann der Bohrvorgang auch mit einem oszillierenden Vorschub durchgeführt werden. Dabei wird der Bohrvorgang mit einem kontinuierlichen Vorschub durchgeführt, wobei der kontinuierliche Vorschub wiederholt zeitweise umgekehrt wird.

Das erfindungsgemäße Verfahren zur Herstellung eines erfindungsgemäßen Folienkondensators hat den Vorteil, dass der Folienkondensator zunächst nach einem der bekannten Herstellungsverfahren hergestellt wird, so dass bei der Herstellung zunächst keine Änderungen oder zusätzliche Kosten auftreten. Erst dann wird in einem zusätzlichen Schritt der Durchgang erzeugt, wobei auch dieser Schritt kostengünstig durchgeführt werden kann.

Im Folgenden wird beschrieben, wie mehrere Kondensatoren zu Kondensatorbaugruppen zusammengeschaltet werden können. Fig. 4A und **4B** zeigen jeweils eine perspektivische Ansicht und einen Querschnitt einer erfindungsgemäßen Kondensatorbaugruppe 400 gemäß eines Ausführungsbeispiels. Dargestellt ist hierbei eine Kondensatorbaugruppe 400, die vier einzelne Folienkondensatoren 300 umfasst, wie sie beispielsweise in Zusammenhang mit den Fig. 3A, 3B und 3C beschrieben sind und die parallel geschaltet sind. Dem Fachmann sollte jedoch klar sein, dass die in Fig. 4A beispielhaft gezeigte Darstellung einer Kondensatorbaugruppe mit vier Folienkondensatoren ohne Weiteres auf eine Baugruppe übertragen werden kann, die mehr oder weniger als die dargestellte Anzahl einzelner Kondensatoren umfasst.

Beispielsweise kann bei einer Kondensatorbaugruppe mit nur einem Folienkondensator 300 ein erstes Anschlusselement 410 mit der ersten 310 oder der zweiten 320 elektrisch leitfähigen Schicht des Folienkondensators 300 verbunden sein. Ein zweites Anschlusselement 420 ist mit der jeweils anderen elektrisch leitfähigen Schicht über eine elektrisch leitfähige Verbindung 350 verbunden, die durch den Durchgang 340 hindurch geführt ist. Das erste und das zweite Anschlusselement 410 bzw. 420 sind dabei elektrisch voneinander isoliert nebeneinander oder übereinander auf der Stirnseitenfläche des Folienkondensators 300 angeordnet, die der elektrisch leitfähigen Schicht gegenüber liegt, die mit der elektrisch leitfähigen Verbindung 350 verbunden ist.

Bei einer Kondensatorbaugruppe mit mehreren Folienkondensatoren können diese jeweils über mehrere Anschlusselemente seriell oder parallel miteinander gekoppelt bzw. kontaktiert sein. Gegebenenfalls werden ein oder mehrere zusätzliche Anschlusselemente als Neutralleiter benötigt. Alle Anschlusselemente sind dabei voneinander elektrisch isoliert nebeneinander oder übereinander auf den Stirnseitenflächen der Folienkondensatoren der Kondensatorbaugruppen angeordnet, die den elektrisch leitfähigen Schichten der Folienkondensatoren gegenüber liegen, die mit den elektrisch leitfähigen Verbindungen kontaktiert sind.

In Fig. 4A und Fig. 4B sind die Kondensatoren 300 der Kondensatorbaugruppe 400 nebeneinander angeordnet. Sie können aber auch übereinander angeordnet sein, oder neben- und übereinander. Die einzelnen Kondensatoren 300 sind hierbei Folienkondensatoren, wie sie beispielsweise in Zusammenhang mit den Fig. 3A, **3B** und **3C** beschrieben wurden. Die einzelnen Folienkondensatoren können durch eine geeignete Isolierung oder Isolierschicht 330 elektrisch voneinander isoliert sein. Um die einzelnen Folienkondensatoren elektrisch miteinander zu verbinden, wird als erstes Anschlusselement 410 beispielsweise ein erstes Anschlussblech 410 auf jeweils der ersten elektrisch leitfähigen Schicht 310 der einzelnen Folienkondensatoren angeordnet und kontaktiert diese elektrisch. An der Außenfläche des ersten Anschlussblechs 410 ist ferner als zweites Anschlusselement 420 ein zweites Anschlussblech 420 angeordnet. Zwischen dem ersten Anschlussblech 410 und dem zweiten Anschlussblech 420 ist eine Isolierschicht 430 angeordnet, die das erste Anschlussblech 410 und das zweite Anschlussblech 420 elektrisch voneinander isoliert. Das zweite Anschlussblech 420 kann die jeweils zweiten elektrisch leitfähigen Schichten 320 der einzelnen Folienkondensatoren 300 kontaktieren, ohne dabei Leitungselemente um die Baugruppe 400 herumzuführen, wie dies beispielsweise in Zusammenhang mit Fig. 2A und 2B beschrieben wurde. Hierzu sind in dem ersten Anschlussblech 410 und in der sich zwischen dem ersten Anschlussblech 410 und zweiten Anschlussblech 420 befindlichen Isolierschicht 430 Aussparungen an Abschnitten angeordnet, an denen jeweils die Durchgänge 340 der einzelnen Folienkondensatoren 300 in Bezug auf das erste Anschlussblech 410 und die sich zwischen dem ersten Anschlussblech 410 und dem zweiten Anschlussblech 420 befindlichen Isolierschicht 430 angeordnet sind. Das zweite Anschlussblech 420 kann somit die jeweils auf der gegenüberliegenden Stirnseite befindlichen zweiten elektrisch leitfähigen Schichten 320 der einzelnen Folienkondensatoren 300 mittels Verbindungsleitungen 350 kontaktieren, die jeweils durch die Durchgänge 340 verlaufen und die jeweils zweiten elektrisch leitfähigen Schichten 320 kontaktieren. Anstelle der im Ausführungsbeispiel in den Figuren beispielhaft als Anschlusselemente verwendeten Anschlussblechen können für die Anschlusselemente 410, 420 auch beispielsweise Leiter, Draht, Flachdraht, Gitter oder Busbars verwendet werden oder aber auch alle anderen als Anschlusselemente geeigneten Leiterkonfigurationen. Die ersten und zweiten Anschlusselemente können auch unterschiedlich ausgestaltet sein.

Eine solche Konfiguration und Anordnung der einzelnen Komponenten und Elemente hat mehrere Vorteile. Dadurch, dass im ersten Anschlusselement 410 und im zweiten Anschlusselement 420, die benachbart und parallel zueinander angeordnet sind, jeweils Ströme in entgegengesetzter Richtung fließen, kompensieren sich die in den Anschlusselementen 410 und 420 erzeugten Magnetfelder gegenseitig. Dies führt zu einer erheblichen Reduzierung parasitärer Induktivitäten. Dadurch, dass die Anschlusselemente 410 und 420 den einen oder die mehreren Kondensatoren 300 nur noch auf einer Seite bedecken, kann die Kondensatorbaugruppe 400 zudem deutlich effizienter und gleichmäßiger gekühlt werden, da der Großteil der Leitungsführung auf nur einer Seite bereitsteht und eine erhöhte Anzahl an Anschlusselementen zum ganzheitlichen Kühlen möglich ist.

Benachbarte einzelne Kondensatoren 300 können auch so angeordnet sein, dass ein erster Kondensator an seiner ersten elektrisch leitfähigen Schicht 310 eine erste Polarität aufweist und ein zweiter benachbarter Kondensator an seiner ersten elektrisch leitfähigen Schicht 310 eine zweite Polarität aufweist, die der Polarität der ersten leitfähigen Schicht 310 des ersten benachbarten Kondensators entgegengesetzt ist. Die ersten und zweiten Anschlusselemente 410 und 420 sind dann entsprechend so mit den ersten und zweiten leitfähigen Schichten 310 und 320 der Kondensatoren verbunden, dass dem ersten Anschlusselement eine Polarität zugeordnet ist und dem zweiten Anschlusselement die entsprechende Gegenpolarität.

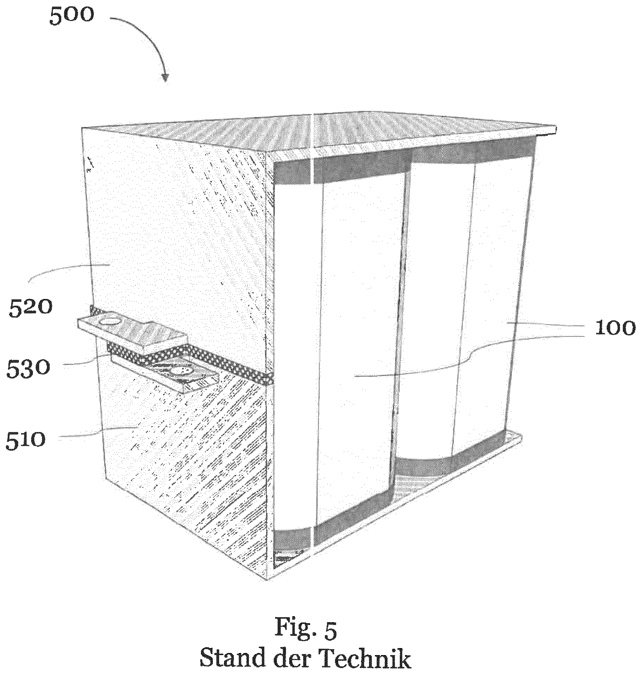

Fig. 5 zeigt eine Kondensatorbaugruppe 500 des Standes der Technik (ähnlich der in Fig. 2A gezeigten) mit vier nebeneinander angeordneten Folienkondensatoren 100 (Flach-, Schicht-, oder Rundwickelkondensatoren), die durch Anschlussbleche 510 und 520, sogenannte Busbars, parallel miteinander verschaltet sind. Ein Busbar kontaktiert die ersten elektrisch leitfähigen Schichten der Folienkondensatoren und ein zweiter Busbar kontaktiert die zweiten elektrisch leitfähigen Schichten der Folienkondensatoren. Beide Busbars 510, 520 sind außen an den Folienkondensatoren angeordnet und verlaufen elektrisch durch eine Isolierung 530 voneinander isoliert an einem Anschlussort zusammen, z.B. für den Anschluss an einen IGBT.

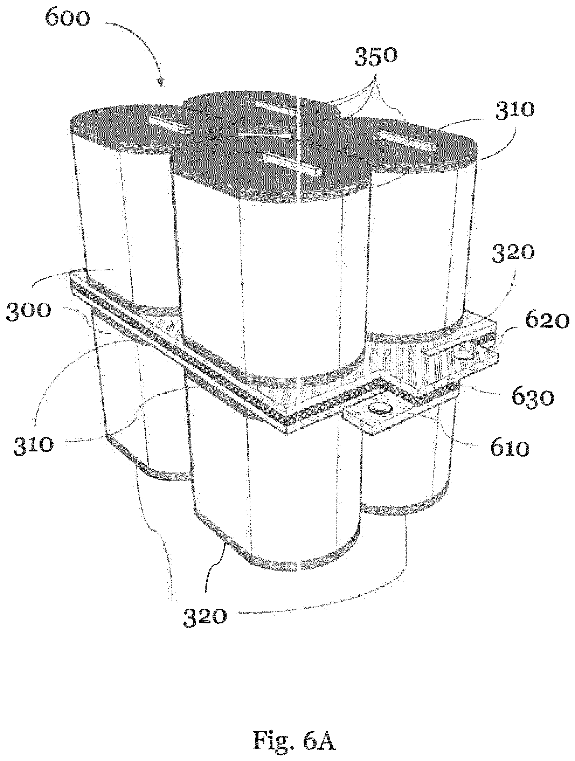

Fig. 6A zeigt eine Kondensatorbaugruppe 600 aus zwei Kondensatorunterbaugruppen, ähnlich den in Fig. 4A gezeigten, mit jeweils vier Folienkondensatoren (Flach-, Schicht-, oder Rundwickelkondensatoren), die in zwei Lagen übereinander angeordnet sind. Dabei kontaktieren die ersten und zweiten elektrisch leitfähigen Schichten 310, 320 der Folienkondensatoren 300 jeweils entsprechend ein erstes Anschlusselement 610 und ein zweites Anschlusselement 620 der Kondensatorbaugruppe 600, um eine Parallelschaltung der Folienkondensatoren 300 zu bilden. Wie oben zu Fig. 4B ausgeführt erlauben jeweils Aussparungen in den beispielhaft in der Fig. 6A als Anschlussbleche ausgeführten Anschlusselementen 610, 620 und der Isolierung 630 die parallele Verschaltung der Folienkondensatoren 300. Mit Bezugszeichen 350 sind die Verbindungsleitungen gezeigt, die an den außen liegenden elektrisch leitfähigen Schichten der Folienkondensatoren der oben bzw. unten angeordneten Kondensatorunterbaugruppe beispielsweise durch Löten kontaktiert sind und die jeweils durch die Durchgänge 340 der Folienkondensatoren 300 hindurch verlaufen, um dann das erste oder zweite Anschlusselement zu kontaktieren.

Ein erstes Anschlussblech 610 der mittig zwischen den Folienkondensatorlagen bzw. unterbaugruppen angeordneten Anschlussbleche ist direkt mit den entsprechenden mittig angeordneten ersten elektrisch leitfähigen Schichten 310 der Folienkondensatoren der ersten Kondensatorunterbaugruppe verbunden. Ein zweites mittig zwischen den Folienkondensatorlagen angeordnetes Anschlussblech 620 ist direkt mit den entsprechenden mittig angeordneten zweiten elektrisch leitfähigen Schichten 320 der Folienkondensatoren der zweiten Kondensatorunterbaugruppe verbunden. Die außen (in Fig. 6A oben und unten an der Kondensatorbaugruppe 600) angeordneten elektrisch leitfähigen Schichten 310 und 320 der Folienkondensatoren der beiden Kondensatorunterbaugruppen sind über durch die Durchgänge der Folienkondensatoren verlaufende Verbindungsleitungen 350 jeweils mit den ersten und zweiten Anschlussblechen 610 und 620 verbunden, so dass das erste Anschlussblech 610 die erste elektrisch leitfähige Schicht 310 der Folienkondensatoren der zweiten (obenliegenden) Kondensatorunterbaugruppe kontaktiert und das zweite Anschlussblech 620 die zweite elektrisch leitfähige Schicht 320 der Folienkondensatoren der ersten (untenliegenden) Kondensatorunterbaugruppe kontaktiert.

Es hat sich gezeigt, dass eine solche Aufteilung eines großen Folienkondensators des Standes der Technik, wie in Fig. 5 gezeigt, in zwei Folienkondensatoren mit halber Wickelhöhe und zwischen den Folienkondensatoren angeordneten Anschlussblechen wie in Fig. 6A gezeigt, zu einer extremen Niederinduktivität führt, die um ca. einen Faktor 10 kleiner ist als bei einem großen Folienkondensator des Standes der Technik. Dies liegt vor allem an dem absolut symmetrischen Kondensatoraufbau ohne Induktionsschleifen. Auch die Verlustwärme im Lastbetrieb ist um ca. einen Faktor 4 kleiner, da durch die Halbierung der Wickelhöhe gegenüber der Folienkondensatorbaugruppe des Standes der Technik eine überproportionale Verringerung des Kondensatorinnenwiderstands und damit der Verlustwärme erreicht wird, und dies bei einem nahezu gleichen Volumen und bei gleichen elektrischen Werten (Kapazität und Nennspannung) wie bei der in Fig. 5 gezeigten Folienkondensatorbaugruppe des Standes der Technik.

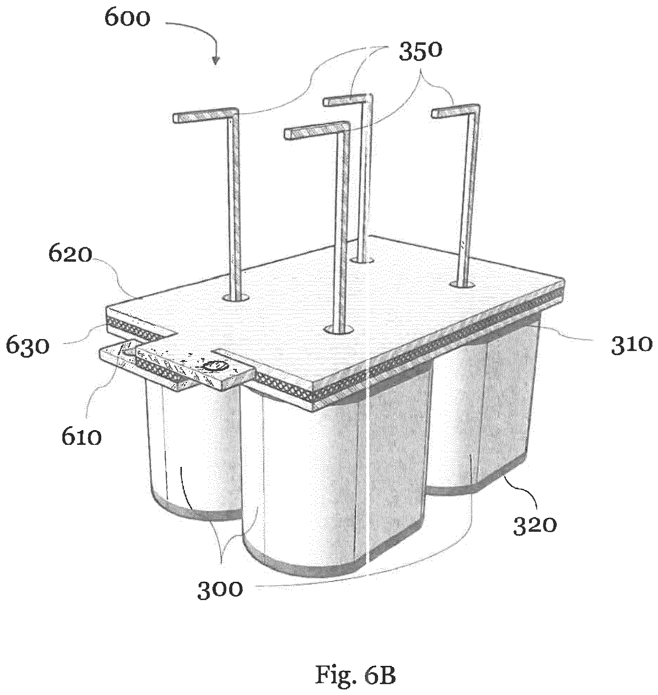

Fig. 6B zeigt ein erstes Anschlusselement 610 in Form eines ersten Anschlussbleches 610, das zum einen direkt mit den ersten elektrisch leitfähigen Schichten 310 der unteren Lage von Folienkondensatoren verbunden ist und zum anderen nach oben elektrische Verbindungsleitungen 350 aufweist, über die die Verbindung zu den ersten elektrisch leitfähigen Schichten 310 der oberen Lage von Folienkondensatoren erfolgt. Ein zweites Anschlusselement 620 in Form eines zweiten Anschlussbleches 620 liegt durch eine Isolierschicht 630 elektrisch isoliert auf dem ersten Anschlusselement 610. In dem zweiten Anschlussblech 620 und der Isolierschicht 630 sind Aussparungen für die mit dem ersten Anschlussblech 310 verbundenen elektrischen

Verbindungsleitungen 350 vorgesehen. Wie in Fig. 6A gezeigt kontaktiert das zweite Anschlussblech 620 direkt die zweiten elektrisch leitfähigen Schichten 320 der oberen Lage von Folienkondensatoren. Wie das erste Anschlussblech 610 weist auch das zweite Anschlussblech 620 elektrische Verbindungsleitungen 350 (nicht gezeigt) auf, die nach unten durch die Folienkondensatoren der ersten Unterbaugruppe verlaufen und elektrisch die jeweiligen zweiten elektrisch leitfähigen Schichten 320 der unteren Lage von Folienkondensatoren kontaktieren. Hierzu sind auch entsprechende Aussparungen in dem ersten Anschlussblech 610 und der Isolierschicht 630 vorgesehen.

In den Fig. 6A und 6B sind beispielhaft zwei Lagen aus je vier Folienkondensatoren gezeigt. Die Lagen können jedoch auch mehr oder weniger Folienkondensatoren umfassen.

Die in den Fig. 6A und 6B beispielhaft gezeigten Folienkondensatoren weisen Durchgänge auf, wie sie bezüglich der erfindungsgemäßen Folienkondensatoren der Fig. 3a, 3B und 3C beschrieben worden sind. Bei Folienkondensatoren ohne erfindungsgemäßem Durchgang oder hohlem Wickelkern können die Verbindungsleitungen auch an der Außenseite der Folienkondensatoren verlaufen.

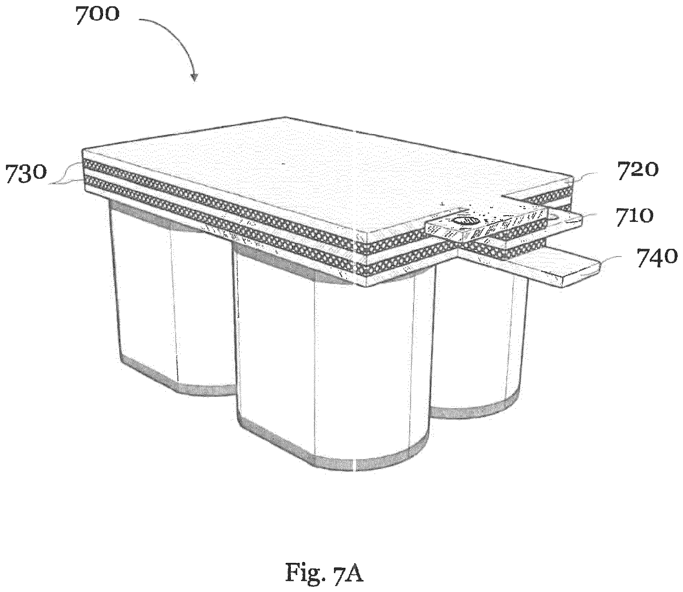

Fig. 7A zeigt beispielhaft eine erfindungsgemäßen Kondensatorbaugruppe 700 gemäß eines weiteren Ausführungsbeispiels das eine Modifikation des in Fig. 4A und 4B beschriebenen Ausführungsbeispiels ist. Zwei Kondensatorunterbaugruppen aus je einem Folienkondensator sind mittels drei Anschlusselementen 710, 720, 740, die durch Isolierungen 730 elektrisch voneinander isoliert sind, in Reihe geschaltet. Aussparungen (nicht gezeigt) in den beispielhaft als Anschlussbleche ausgeführten Anschlusselementen 710, 720, 740 und den Isolierungen 730 erlauben die für die Reihenschaltung notwendigen Kontaktierungen der einzelne Anschlusselemente. Durch eine entsprechende Anzahl von Anschlusselementen können auch mehr als zwei Kondensatorunterbaugruppen miteinander in Reihe geschaltet werden. Die Kondensatorunterbaugruppen können dabei jeweils aus einer Kondensatorbaugruppe mit nur einem Folienkondensator oder aus einer Kondensatorbaugruppe mit mehreren parallel geschalteten Folienkondensatoren (wie beispielsweise mit Bezug auf Fig. 4A und 4B gezeigt) bestehen.

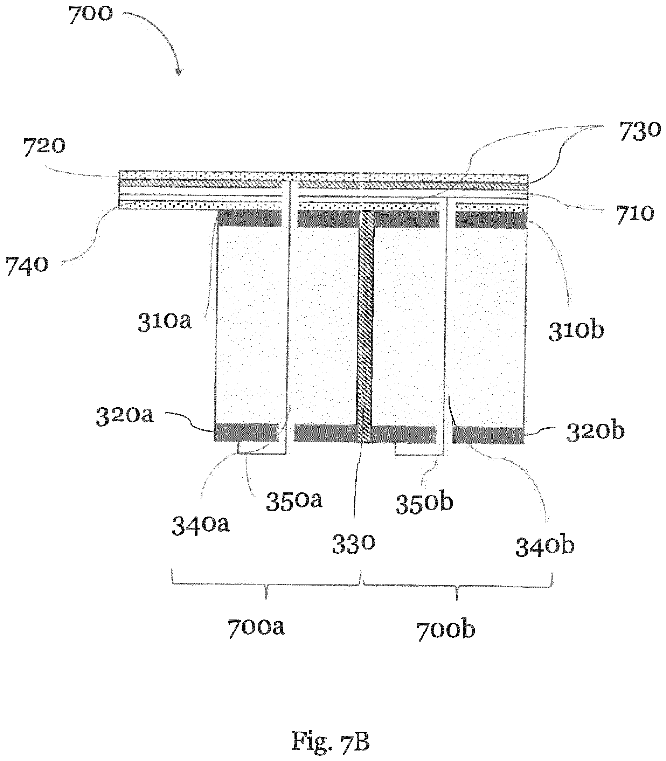

Fig. 7B zeigt einen Querschnitt der erfindungsgemäßen Kondensatorbaugruppe 700 gemäß Fig. 7A. Die Kondensatorbaugruppe 700 umfasst mindestens zwei integrierte einzelne Kondensatorunterbaugruppen 700a, 700b, die in Reihe geschaltet sind. Die Kondensatorbaugruppe 700 kann n-viele in Reihe geschaltete Kondensatorunterbaugruppen 700a, 700b umfassen. Die Kondensatorunterbaugruppen 700a, 700b können einzelne Kondensatoren oder mehrere Kondensatoren umfassen. Beispielsweise können auch mehrere Kondensatorunterbaugruppen mit parallel geschalteten Kondensatoren, wie sie bezüglich der Fig. 4A, 4B und 6A beschrieben wurden, in Reihe geschaltet werden. Die Kondensatorbaugruppe 700 ist daher beliebig erweiterbar.

Um die gewünschte Reihenschaltung der gezeigten Kondensatorunterbaugruppen zu erreichen, werden drei Anschlusselemente 710, 720 und 740 benötigt. Ein drittes Anschlusselement 740 ist in diesem Ausführungsbeispiel zwischen einem ersten Anschlusselement 710 und den jeweils ersten elektrisch leitfähigen Schichten 310a, 310b der einzelnen Kondensatoren bzw. Kondensatorunterbaugruppen angeordnet. Zusätzlich ist zwischen dem dritten Anschlusselement 740, das als Neutralleiter fungiert, und dem ersten Anschlusselement 710 eine Isolierung bzw. Isolierschicht 730 angeordnet, die das erste Anschlusselement 710 und das dritte Anschlusselement 740 elektrisch voneinander isoliert. Aufgrund der Reihenschaltung ergibt sich ggf. eine wechselseitige Verschaltung der Wickel bei der Polarität.

In entsprechenden Abschnitten des dritten Anschlusselements 740 und der Isolierschicht 730 zwischen dem dritten Anschlusselement 740 und dem ersten Anschlusselement 710 sind Aussparungen angeordnet, die entsprechend den Positionen der Durchgänge 340a, 340b der Kondensatoren bzw. den Kondensatorunterbaugruppen 700a, 700b der Kondensatorbaugruppe 700 angeordnet sind. Durch diese Aussparungen kann das erste Anschlusselement 710 die zweite elektrisch leitfähige Schicht 32ob der zweiten Kondensatorunterbaugruppe 700b mittels einer Verbindungsleitung 350b kontaktieren, die sich durch den Durchgang 340b erstreckt. In entsprechenden Abschnitten des dritten Anschlusselements 740 und der Isolierschicht 730 zwischen dem dritten Anschlusselement 740 und dem ersten Anschlusselement 710, sowie der Isolierschicht 730 zwischen dem ersten Anschlusselement 710 und dem zweiten Anschlusselement 720, sowie des ersten Anschlusselements 710 sind ferner Aussparungen angeordnet, die entsprechend der Position des Durchgangs 340a des Kondensators einer weiteren Kondensatorunterbaugruppe 700a der Kondensatorbaugruppe 700 angeordnet sind. Das zweite Anschlusselement 720 kann dadurch die zweite elektrisch leitfähige Schichten 320a der Kondensatorunterbaugruppe 700a mittels einer Verbindungsleitung 350a kontaktieren, die sich durch den Durchgang 340a erstreckt. Einzelne Kondensatoren können so angeordnet sein, dass jeweils nächste Nachbarn der einzelnen Kondensatoren jeweils einer anderen Kondensatorunterbaugruppe angehören. Die beschriebene Kondensatorbaugruppe 700 weist die gleichen Vorteile auf, wie sie bereits in Zusammenhang mit Fig. 4A und 4B erläutert wurden. Im in den Fig. 7A und 7B gezeigten Ausführungsbeispiel wurden als Anschlusselemente Anschlussbleche verwendet. Als Anschlusselemente können beispielsweise aber auch Leiter, Draht, Flachdraht, Gitter oder ein Busbar verwendet werden.

Die Reihenfolge der Schichtung der einzelnen Anschlusselemente 710, 720 und 740 kann unter Beibehaltung der oben beschriebenen Kontaktiersystematik beliebig variiert werden. Wie oben bezüglich Fig. 7A beschrieben können durch eine entsprechende Anzahl von Anschlusselementen und deren Kontaktierung auch mehr als zwei Kondensatorunterbaugruppen miteinander in Reihe geschaltet werden.

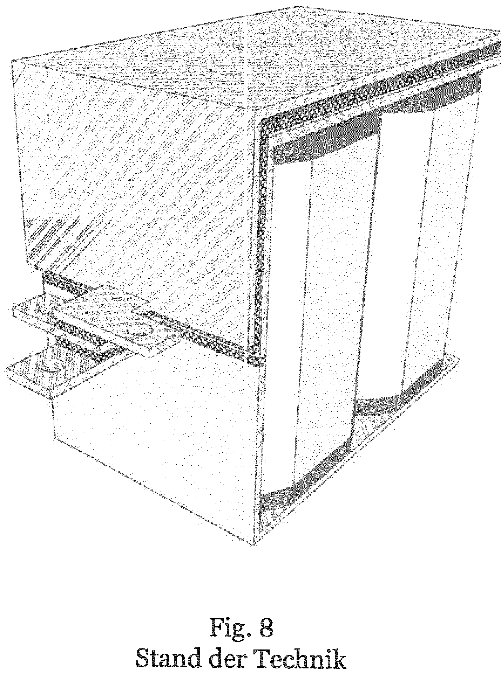

Fig. 8 zeigt eine Kondensatorbaugruppe des Standes der Technik mit vier nebeneinander angeordneten Folienkondensatoren (Flach-, Schicht-, oder Rundwickelkondensatoren), die durch Anschlussbleche, sogenannte Busbars, seriell miteinander verschaltet sind. Ein Busbar kontaktiert die ersten elektrisch leitfähigen Schichten der Folienkondensatoren und ein zweiter Busbar kontaktiert die zweiten elektrisch leitfähigen Schichten der Folienkondensatoren. Ein dritter Busbar dient als Neutralleiter. Die Busbars sind voneinander elektrisch isoliert. Alle Busbars sind außen an den Folienkondensatoren angeordnet und verlaufen an einem Anschlussort zusammen, z.B. für den Anschluss an einen IGBT.

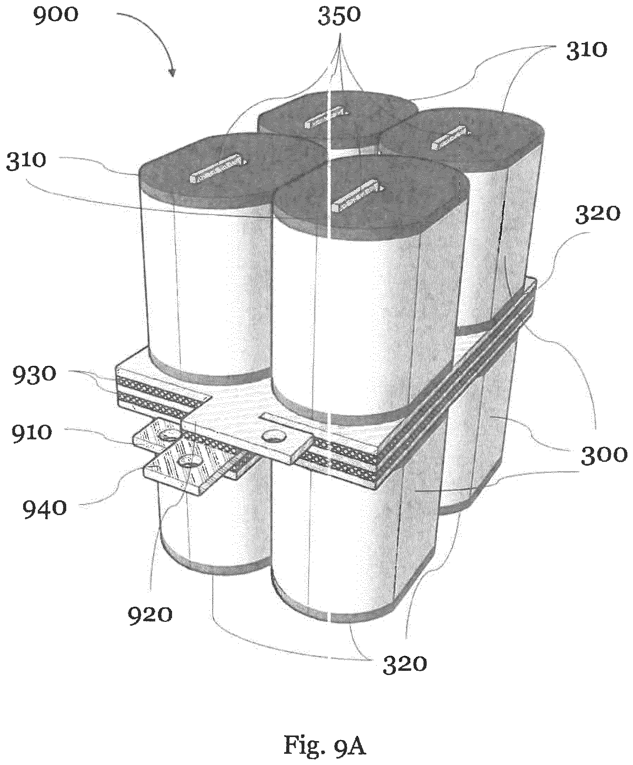

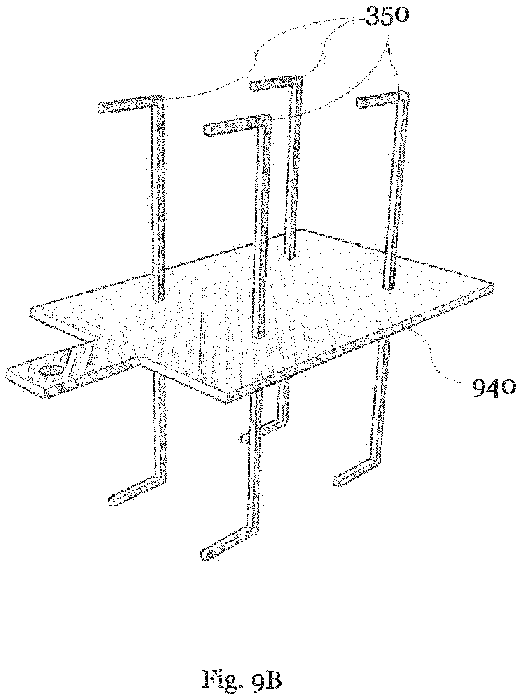

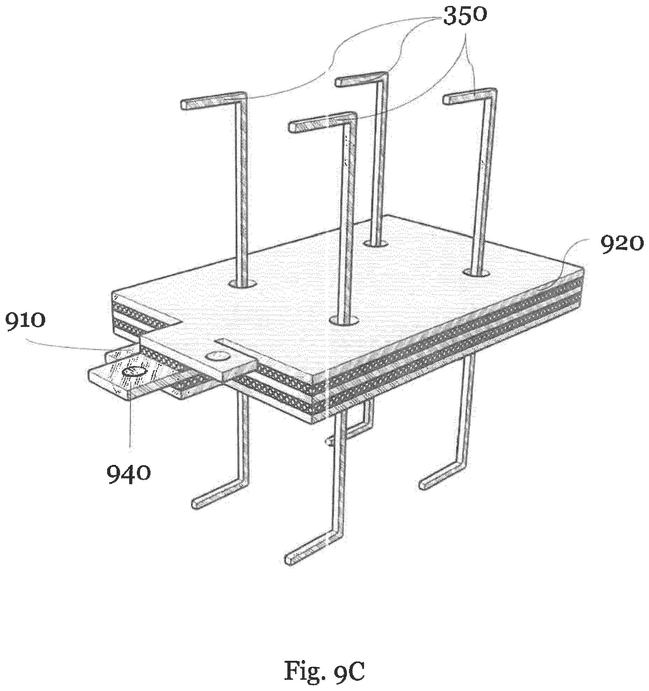

Fig. 9A zeigt beispielhaft eine erfindungsgemäße Kondensatorbaugruppe bestehend aus zwei Kondensatorunterbaugruppen 900 mit jeweils vier Folienkondensatoren (Flach-, Schicht-, oder Rundwickelkondensatoren), die in zwei Lagen übereinander angeordnet sind. Dabei kontaktiert ein erstes Anschlusselement 910 die ersten elektrisch leitfähigen Schichten 310 der Folienkondensatoren 300 der ersten Kondensatorunterbaugruppe und ein zweites Anschlusselement 920 die zweiten elektrisch leitfähigen Schichten 320 der Folienkondensatoren 300 der zweiten Kondensatorunterbaugruppe. Ein drittes Anschlusselement 940 fungiert als Neutralleiter und kontaktiert über eine erste Verbindungsleitung 350 die jeweils zweite elektrisch leitfähige Schicht 320 der Folienkondensatoren der ersten Unterbaugruppe und über eine zweite Verbindungsleitung 350 die jeweils erste elektrisch leitfähige Schicht 310 der Folienkondensatoren 300 der zweiten Unterbaugruppe. Diese ersten und zweiten Verbindungsleitungen können durch innere Durchgänge in den Folienkondensatoren von der jeweils ersten elektrisch leitfähigen Schicht zu der jeweils zweiten elektrisch leitfähigen Schicht verlaufen oder außen an den Folienkondensatoren vorbei. Damit wird eine serielle Verschaltung der Folienkondensatoren erreicht. Die einzelnen Anschlusselemente 910, 920 und 940 sind durch Isolierschichten 930 elektrisch voneinander isoliert.

Wie oben zu Fig. 4B ausgeführt, erlauben jeweils Aussparungen in den beispielhaft in den Fig. 9A bis 9C als Anschlussbleche ausgeführten Anschlusselementen 910, 920, 940 und der Isolierung 930 die serielle Verschaltung der Folienkondensatoren. Mit Bezugszeichen 350 sind die Verbindungsleitungen gezeigt, die von dem als Neutralleiter fungierenden dritten Anschlusselement 940 ausgehen und die die außen liegenden elektrisch leitfähigen Schichten der Folienkondensatoren der oberen und der unteren Kondensatorbaugruppe bzw. Kondensatorlagen beispielsweise durch Löten kontaktieren.

Die mittig zwischen den Folienkondensatorlagen angeordneten ersten und zweiten Anschlussbleche 910 und 920 sind direkt mit den entsprechenden mittig angeordneten ersten bzw. zweiten elektrisch leitfähigen Schichten 310, 320 der Folienkondensatoren 300 verbunden.

Es hat sich auch hier gezeigt, dass eine solche Aufteilung eines großen Folienkondensators des Standes der Technik, wie in Fig. 8 gezeigt, in zwei Folienkondensatoren mit halber Wickelhöhe und zwischen den Folienkondensatoren angeordneten Anschlussblechen wie in Fig. 9A gezeigt, zu einer extremen Niederinduktivität führt, die um ca. einen Faktor 10 kleiner ist als bei einem großen Folienkondensator des Standes der Technik. Dies liegt vor allem an dem absolut symmetrischen Kondensatoraufbau ohne Induktionsschleifen. Auch die Verlustwärme im Lastbetrieb ist um ca. einen Faktor 4 kleiner, da durch die Halbierung der Wickelhöhe gegenüber der Folienkondensatorbaugruppe des Standes der Technik eine überproportionale Verringerung des Kondensatorinnenwiderstands und damit der Verlustwärme erreicht wird, und dies bei einem nahezu gleichen Volumen und bei gleichen elektrischen Werten (Kapazität und Nennspannung) wie bei der in Fig. 8 gezeigten Folienkondensatorbaugruppe des Standes der Technik.

Die in den Fig. 9A bis 9C beispielhaft gezeigten Folienkondensatoren weisen Durchgänge auf, wie sie bezüglich der erfindungsgemäßen Folienkondensatoren der Fig. 3A, 3B und 3C beschrieben worden sind. Bei Folienkondensatoren ohne erfindungsgemäßem Durchgang oder hohlem Wickelkern können die Verbindungsleitungen auch an der Außenseite der Folienkondensatoren verlaufen.

In den Fig. 4A, 4B, 6A, 6B, 7A, 7B und 9A bis 9C sind beispielhaft parallele und serielle Kopplungen von jeweils vier Folienkondensatoren 300 gezeigt. Die Anschlusselemente können hierbei auch anders als gezeigt angeordnet werden, insbesondere auch in anderer Reihenfolge über- oder nebeneinander. Auch die Anzahl der Folienkondensatoren ist nicht auf vier beschränkt und kann mehr oder weniger Folienkondensatoren umfassen.

## Patentansprüche

1. Kondensatorbaugruppe umfassend einen Folienkondensator (300) für eine Leistungselektronik, der Folienkondensator (300) umfassend:
eine erste elektrisch leitfähige Schicht (310), die auf einer ersten Stirnseitenfläche des Folienkondensators (300) angeordnet ist, wobei die Flächennormale der ersten elektrisch leitfähigen Schicht (310, 310a, 31ob) senkrecht zu den Oberflächennormalen von Dielektrikumsfolien (305) des Folienkondensators (300) ist,
eine zweite elektrisch leitfähige Schicht (320, 320a, 320b), die auf einer der ersten Stirnseitenfläche gegenüberliegenden, zweiten Stirnseitenfläche angeordnet ist, wobei die Flächennormale der zweiten elektrisch leitfähigen Schicht (320, 320a, 320b) senkrecht zu den Oberflächennormalen der Dielektrikumsfolien (305) des Folienkondensators ist,
wobei der Folienkondensator (300) mindestens einen inneren Durchgang (340, 340a, 340b) zum Durchführen einer elektrisch leitfähigen Verbindung aufweist,
der sich von der ersten elektrisch leitfähigen Schicht (310, 310a, 310b) zu der zweiten elektrisch leitfähigen Schicht (320, 320a, 320b) erstreckt,
wobei der Durchgang (340, 340a, 340b) durch Entfernen von Kondensatormaterial gebildet ist,
**dadurch gekennzeichnet, dass**
eine elektrisch leitfähige Verbindung (350) von der ersten (310) oder der zweiten (320) elektrisch leitfähigen Schicht auf der einen Stirnseitenfläche des Folienkondensators (300) durch den Durchgang (340) hindurch zur jeweilig anderen Stirnseitenfläche des Folienkondensators (300) geführt ist.

2. Kondensatorbaugruppe gemäß Anspruch 1, wobei der Folienkondensator (300) ein Flachwickel- oder Schichtkondensator ist, und/oder wobei der Durchgang (340, 340a, 340b) eine Bohrung ist.

3. Kondensatorbaugruppe gemäß einem der vorhergehenden Ansprüche, wobei die Dielektrikumsfolien (305) des Folienkondensators (300) Kunststofffolien aus Polyester (PET), Polyethylennaphthalat (PEN), Polyphenylensulfid (PPS), Polypropylen (PP), Polytetrafluorethylen (PTFE), Polystyrol (PS) oder Polycarbonat (PC) umfassen, und/oder wobei die Dielektrikumsfolien (305) ganz oder teilweise metallisiert oder nicht metallisiert sind.

4. Kondensatorbaugruppe gemäß einem der Ansprüche 1 bis 3, wobei ein erstes Anschlusselement (410) mit der ersten (310) oder der zweiten (320) elektrisch leitfähigen Schicht des Folienkondensators (300) verbunden ist, wobei ein zweites Anschlusselement (420) mit der jeweils anderen elektrisch leitfähigen Schicht über die elektrisch leitfähige Verbindung (350) verbunden ist, die durch den Durchgang (340) hindurch geführt ist, und wobei das erste und das zweite Anschlusselement (410, 420) voneinander elektrisch isoliert (430) nebeneinander oder übereinander auf derselben Stirnseitenfläche des Folienkondensators (300) angeordnet sind, die der elektrisch leitfähigen Schicht gegenüber liegt, die mit der elektrisch leitfähigen Verbindung (350) verbunden ist.

5. Kondensatorbaugruppe, wobei mehrere Kondensatorbaugruppen gemäß einem der Ansprüche 1 bis 3 über mehrere Anschlusselemente (410, 420; 710, 720, 740) seriell oder parallel miteinander kontaktiert sind, wobei alle Anschlusselemente voneinander elektrisch isoliert nebeneinander oder übereinander auf den Stirnseitenflächen der Folienkondensatoren (300) der Kondensatorbaugruppen angeordnet sind, die den elektrisch leitfähigen Schichten der Folienkondensatoren (300) gegenüber liegen, die mit den elektrisch leitfähigen Verbindungen (350) kontaktiert sind.

6. Kondensatorbaugruppe (400), umfassend mehrere Kondensatorbaugruppen gemäß einem der Ansprüche 1 bis 3, die nebeneinander angeordnet sind, wobei ein erstes Anschlusselement (410) mit jeweils der ersten elektrisch leitfähigen Schicht (310) oder der zweiten elektrisch leitfähigen Schicht (320) der Folienkondensatoren (300) der Kondensatorbaugruppen verbunden ist, wobei ein zweites Anschlusselement (420) mit jeweils der ersten elektrisch leitfähigen Schicht (310) oder der zweiten elektrisch leitfähigen Schicht (320) der Folienkondensatoren (300) der Kondensatorbaugruppen, die jeweils gegenpolig zu den ersten oder zweiten elektrisch leitfähigen Schichten (310, 320) sind, die mit dem ersten Anschlusselement (410) verbunden sind, verbunden ist, wobei das erste und das zweite Anschlusselement (410, 420) voneinander elektrisch isoliert nebeneinander oder übereinander auf derselben Stirnseitenfläche des Folienkondensators (300) angeordnet sind, die der elektrisch leitfähigen Schicht gegenüber liegt, die mit der elektrisch leitfähigen Verbindung (350) verbunden ist,
wobei die Verbindung des ersten und zweiten Anschlusselements (310, 320) mit den jeweiligen ersten oder zweiten elektrisch leitfähigen Schichten jeweils entweder direkt oder über die elektrisch leitfähige Verbindung (350), die durch den Durchgang (340) des jeweiligen Folienkondensators (300) hindurch geführt ist, erfolgt.

7. Kondensatorbaugruppe (700), umfassend mehrere Kondensatorunterbaugruppen (700a, 700b), wobei die Kondensatorunterbaugruppen (700a, 700b) jeweils eine Kondensatorbaugruppe gemäß Anspruch 4 oder eine Kondensatorbaugruppe gemäß Anspruch 6 umfassen,
wobei die Kondensatorunterbaugruppen (700a, 700b) mittels eines dritten Anschlusselements (740) in Reihe geschaltet sind, wobei das erste, das zweite und das dritte Anschlusselement (710, 720, 740) voneinander elektrisch isoliert nebeneinander oder übereinander auf derselben Stirnseitenfläche des Folienkondensators (300) angeordnet sind, die der elektrisch leitfähigen Schicht gegenüber liegt, die mit der elektrisch leitfähigen Verbindung (350) verbunden ist.

8. Kondensatorbaugruppe, umfassend:
eine erste Unterbaugruppe umfassend:
mindestens eine Kondensatorbaugruppe gemäß einem der Ansprüche 1 bis 3;
ein erstes Anschlusselement (610), das jeweils die erste elektrisch leitfähige Schicht (310) des mindestens einen Folienkondensators der ersten Unterbaugruppe kontaktiert;
eine über der ersten Unterbaugruppe angeordnete zweite Unterbaugruppe, umfassend:
mindestens eine Kondensatorbaugruppe gemäß einem der Ansprüche 1 bis 3; ein zweites Anschlusselement (620), das jeweils die zweite elektrisch leitfähige Schicht (320) des mindestens einen Folienkondensators der zweiten Unterbaugruppe kontaktiert;
wobei das erste Anschlusselement (610) jeweils die erste elektrisch leitfähige Schicht (310) des mindestens einen Folienkondensators der zweiten Unterbaugruppe über die elektrisch leitfähige Verbindung (350), die durch den Durchgang (340) des Folienkondensators (300) der zweiten Unterbaugruppe hindurch geführt ist kontaktiert; und
wobei das zweite Anschlusselement (620) jeweils die zweite elektrische leitfähige Schicht (320) des mindestens einen Folienkondensators der ersten Unterbaugruppe über die elektrisch leitfähige Verbindung (350), die durch den Durchgang (340) des Folienkondensators (300) der ersten Unterbaugruppe hindurch geführt ist kontaktiert.

9. Kondensatorbaugruppe nach Anspruch 8, wobei das erste Anschlusselement (610) und/oder das zweite Anschlusselement (620) zumindest teilweise zwischen der ersten Unterbaugruppe und der zweiten Unterbaugruppe angeordnet ist, und /oder
wobei das erste Anschlusselement (610) Aussparungen zum Durchführen der mindestens einen zweiten Verbindungsleitung (350) des zweiten Anschlusselements (620) aufweist, und das zweite Anschlusselement (620) Aussparungen zum Durchführen der mindestens einen ersten Verbindungsleitung (350) des ersten Anschlusselements (610) aufweist.

10. Kondensatorbaugruppe umfassend:
eine erste Unterbaugruppe umfassend:
mindestens eine Kondensatorbaugruppe gemäß einem der Ansprüche 1 bis 3;
ein erstes Anschlusselement (910), das jeweils die erste elektrisch leitfähige Schicht (310) des mindestens einen Folienkondensators der ersten Unterbaugruppe kontaktiert;
eine über der ersten Unterbaugruppe angeordnete zweite Unterbaugruppe, umfassend:
mindestens eine Kondensatorbaugruppe gemäß einem der Ansprüche 1 bis 3;
ein zweites Anschlusselement (920), das jeweils die zweite elektrisch leitfähige Schicht (320) des mindestens einen Folienkondensators der zweiten Unterbaugruppe kontaktiert;
ein drittes Anschlusselement (940);
wobei das dritte Anschlusselement (940) die jeweils zweite elektrisch leitfähige Schicht (320) des mindestens einen Folienkondensators der ersten Unterbaugruppe über die elektrisch leitfähige Verbindung (350), die durch den Durchgang (340) des Folienkondensators (300) der ersten Unterbaugruppe hindurch geführt ist, kontaktiert, und wobei das dritte Anschlusselement (940) die jeweils erste elektrisch leitfähige Schicht (310) des mindestens einen Folienkondensators der zweiten Unterbaugruppe über die elektrisch leitfähige Verbindung (350), die durch den Durchgang (340) des Folienkondensators (300) der zweiten Unterbaugruppe hindurch geführt ist, kontaktiert.

11. Kondensatorbaugruppe nach Anspruch 10, wobei das erste Anschlusselement (910) und/oder das zweite Anschlusselement (920) und/oder das dritte Anschlusselement (940) zumindest teilweise zwischen der ersten Unterbaugruppe und der zweiten Unterbaugruppe angeordnet ist.

12. Kondensatorbaugruppe nach einem der Ansprüche 10 bis 11, wobei das erste Anschlusselement (910) Aussparungen zum Durchführen der mindestens einen ersten Verbindungsleitung (350) des dritten Anschlusselements (940) aufweist, und das zweite Anschlusselement (920) Aussparungen zum Durchführen der mindestens einen zweiten Verbindungsleitung (350) des dritten Anschlusselements (940) aufweist.

13. Kondensatorbaugruppe gemäß einem der Ansprüche 4 bis 12, wobei die Anschlusselemente (410, 420; 610, 620; 710, 720, 740; 910, 920, 940) jeweils als Leiter, Draht, Flachdraht, Gitter, Anschlussblech oder Busbar ausgestaltet sind.

14. Verfahren zum Herstellen einer Kondensatorbaugruppe (300) gemäß einem der Ansprüche 1 bis 3, wobei bei einem Folienkondensator zum Herstellen eines Durchgangs (340, 340a, 340b) Kondensatormaterial entfernt wird, und ferner umfassend
Verbinden der ersten elektrisch leitfähigen Schicht (310) oder zweiten elektrisch leitfähigen Schicht (3209 mit einer elektrisch leitfähigen Verbindung (350), und Führen der elektrisch leitfähigen Verbindung (350) durch den Durchgang (340, 340a, 340b) hindurch.

## Claims

1. Capacitor assembly comprising a foil capacitor (300) for power electronics, the foil capacitor (300) comprising:
a first electrically conductive layer (310) arranged on a first face side surface of the foil capacitor (300), wherein the surface normal of the first electrically conductive layer (310, 310a, 310b) is perpendicular to the surface normals of dielectric foils (305) of the foil capacitor (300),
a second electrically conductive layer (320, 320a, 320b) arranged on a second face side surface opposite the first face side surface, wherein the surface normal of the second electrically conductive layer (320, 320a, 320b) is perpendicular to the surface normals of the dielectric foils (305) of the foil capacitor,
wherein the foil capacitor (300) has at least one internal passage (340, 340a, 340b) for passing through an electrically conductive connection extending from the first electrically conductive layer (310, 310a, 310b) to the second electrically conductive layer (320, 320a, 320b),
wherein the passage (340, 340a, 340b) is formed by removing capacitor material,
**characterized in that**
an electrically conductive connection (350) from the first (310) or the second (320) electrically conductive layer on the one face side surface of the foil capacitor (300) is led through the passage (340) to the respective other face side surface of the foil capacitor (300).

2. Capacitor assembly according to claim 1, wherein the foil capacitor (300) is a flat-wound or laminated capacitor, and/or wherein the passage (340, 340a, 340b) is a bore.

3. Capacitor assembly according to one of the preceding claims, wherein the dielectric foils (305) of the foil capacitor (300) comprise plastic foils made of polyester (PET), polyethylene naphthalate (PEN), polyphenylene sulfide (PPS), polypropylene (PP), polytetrafluoroethylene (PTFE), polystyrene (PS) or polycarbonate (PC), and/or wherein the dielectric foils (305) are fully or partially metallized or non-metallized.

4. Capacitor assembly according to one of claims 1 to 3, wherein a first connection element (410) is connected to the first (310) or the second (320) electrically conductive layer of the foil capacitor (300), wherein a second connection element (420) is connected to the respective other electrically conductive layer via the electrically conductive connection (350) which is led through the passage (340), and wherein the first and the second connection element (410, 420) are arranged next to one another or one above the other in an electrically insulated manner (430) from one another on the same face side surface of the foil capacitor (300) which lies opposite the electrically conductive layer which is connected to the electrically conductive connection (350).

5. Capacitor assembly, wherein multiple capacitor assemblies according to one of claims 1 to 3 are contacted with one another in series or in parallel via multiple connection elements (410, 420; 710, 720, 740), wherein all connection elements are arranged next to one another or one above the other in an electrically insulated manner from one another on the face side surfaces of the foil capacitors (300) of the capacitor assemblies which lie opposite the electrically conductive layers of the foil capacitors (300) which are contacted with the electrically conductive connections (350).

6. Capacitor assembly (400), comprising multiple capacitor assemblies according to one of claims 1 to 3 which are arranged next to one another,
wherein a first connection element (410) is connected to the respective first electrically conductive layer (310) or the second electrically conductive layer (320) of the foil capacitors (300) of the capacitor assemblies,
wherein a second connection element (420) is connected to the respective first electrically conductive layer (310) or the second electrically conductive layer (320) of the foil capacitors (300) of the capacitor assemblies which are each of opposite polarity to the first or second electrically conductive layers (310, 320) which are connected to the first connection element (410),
wherein the first and the second connection element (410, 420) are arranged next to one another or one above the other in an electrically insulated manner from one another on the same face side surface of the foil capacitor (300) which lies opposite the electrically conductive layer which is connected to the electrically conductive connection (350),
wherein the connection of the first and second connection element (310, 320) to the respective first or second electrically conductive layers takes place in each case either directly or via the electrically conductive connection (350) which is led through the passage (340) of the respective foil capacitor (300).

7. Capacitor assembly (700), comprising multiple capacitor subassemblies (700a, 700b), wherein the capacitor subassemblies (700a, 700b) each comprise a capacitor assembly according to claim 4 or a capacitor assembly according to claim 6,
wherein the capacitor subassemblies (700a, 700b) are connected in series by means of a third connection element (740), wherein the first, the second and the third connection element (710, 720, 740) are arranged next to one another or one above the other in an electrically insulated manner from one another on the same face side surface of the foil capacitor (300) which lies opposite the electrically conductive layer which is connected to the electrically conductive connection (350).

8. Capacitor assembly, comprising:
a first subassembly comprising:
at least one capacitor assembly according to one of claims 1 to 3;
a first connection element (610) which contacts the respective first electrically conductive layer (310) of the at least one foil capacitor of the first subassembly; a second subassembly arranged above the first subassembly, comprising:
at least one capacitor assembly according to one of claims 1 to 3;
a second connection element (620) which contacts the respective second electrically conductive layer (320) of the at least one foil capacitor of the second subassembly;
wherein the first connection element (610) contacts the respective first electrically conductive layer (310) of the at least one foil capacitor of the second subassembly via the electrically conductive connection (350) which is led through the passage (340) of the foil capacitor (300) of the second subassembly; and
wherein the second connection element (620) contacts the respective second electrically conductive layer (320) of the at least one foil capacitor of the first subassembly via the electrically conductive connection (350) which is led through the passage (340) of the foil capacitor (300) of the first subassembly.

9. Capacitor assembly according to claim 8, wherein the first connection element (610) and/or the second connection element (620) is arranged at least partially between the first subassembly and the second subassembly, and/or wherein the first connection element (610) has recesses for passing through the at least one second connection line (350) of the second connection element (620), and the second connection element (620) has recesses for passing through the at least one first connection line (350) of the first connection element (610).

10. Capacitor assembly comprising:
a first subassembly comprising:
at least one capacitor assembly according to one of claims 1 to 3;
a first connection element (910) which contacts the respective first electrically conductive layer (310) of the at least one foil capacitor of the first subassembly;
a second subassembly arranged above the first subassembly, comprising:
at least one capacitor assembly according to one of claims 1 to 3;
a second connection element (920) which contacts the respective second electrically conductive layer (320) of the at least one foil capacitor of the second subassembly;
a third connection element (940);
wherein the third connection element (940) contacts the respective second electrically conductive layer (320) of the at least one foil capacitor of the first subassembly via the electrically conductive connection (350) which is led through the passage (340) of the foil capacitor (300) of the first subassembly, and wherein the third connection element (940) contacts the respective first electrically conductive layer (310) of the at least one foil capacitor of the second subassembly via the electrically conductive connection (350) which is led through the passage (340) of the foil capacitor (300) of the second subassembly.

11. Capacitor assembly according to claim 10, wherein the first connection element (910) and/or the second connection element (920) and/or the third connection element (940) is arranged at least partially between the first subassembly and the second subassembly.

12. Capacitor assembly according to one of claims 10 to 11, wherein the first connection element (910) has recesses for passing through the at least one first connection line (350) of the third connection element (940), and the second connection element (920) has recesses for passing through the at least one second connection line (350) of the third connection element (940).

13. Capacitor assembly according to one of claims 4 to 12, wherein the connection elements (410, 420; 610, 620; 710, 720, 740; 910, 920, 940) are each configured as a conductor, wire, flat wire, grid, connection plate or busbar.

14. Method for producing a capacitor assembly (300) according to one of claims 1 to 3, wherein capacitor material is removed in a foil capacitor for producing a passage (340, 340a, 340b), and further comprising
connecting the first electrically conductive layer (310) or second electrically conductive layer (3209) to an electrically conductive connection (350), and leading the electrically conductive connection (350) through the passage (340, 340a, 340b).

## Revendications

1. Ensemble condensateur comprenant un condensateur à film (300) pour une électronique de puissance, le condensateur à film (300) comprenant :
une première couche électriquement conductrice (310) qui est disposée sur une première face latérale frontale du condensateur à film (300), dans lequel la normale à la surface de la première couche électriquement conductrice (310, 310a, 310b) est perpendiculaire aux normales aux surfaces de films diélectriques (305) du condensateur à film (300),
une deuxième couche électriquement conductrice (320, 320a, 320b) qui est disposée sur une deuxième surface latérale frontale opposée à la première surface latérale frontale, dans lequel la normale à la surface de la deuxième couche électriquement conductrice (320, 320a, 320b) est perpendiculaire aux normales aux surfaces des films diélectriques (305) du condensateur à film,
dans lequel le condensateur à film (300) présente au moins un passage (340, 340a, 340b) intérieur destiné à faire passer une liaison électriquement conductrice qui s'étend depuis la première couche électriquement conductrice (310, 310a, 310b) vers la deuxième couche électriquement conductrice (320, 320a, 320b),
dans lequel le passage (340, 340a, 340b) est formé par la suppression de matériau de condensateur,
**caractérisé en ce que**
une liaison électriquement conductrice (350) est guidée depuis la première (310) ou la deuxième (320) couche électriquement conductrice sur une surface latérale frontale du condensateur à film (300) à travers le passage (340) vers l'autre surface latérale frontale respective du condensateur à film (300).

2. Ensemble condensateur selon la revendication 1, dans lequel le condensateur à film (300) est un condensateur à enroulement plat ou stratifié, et/ou dans lequel le passage (340, 340a, 340b) est un alésage.

3. Ensemble condensateur selon l'une des revendications précédentes, dans lequel les films diélectriques (305) du condensateur à film (300) sont des films en matière plastique en polyester (PET), naphtalate de polyéthylène (PEN), sulfure de polyphénylène (PPS), polypropylène (PP), polytétrafluoroéthylène (PTFE), polystyrène (PS) ou polycarbonate (PC), et/ou dans lequel les films diélectriques (305) sont entièrement ou en partie métallisés ou non métallisés.

4. Ensemble condensateur selon l'une des revendications 1 à 3, dans lequel un premier élément de connexion (410) est relié à la première (310) ou à la deuxième (320) couche électriquement conductrice du condensateur à film (300), dans lequel un deuxième élément de connexion (420) est relié à l'autre couche électriquement conductrice respectivement par l'intermédiaire de la liaison électriquement conductrice (350) qui est guidée à travers le passage (340), et dans lequel le premier et le deuxième élément de connexion (410, 420) sont disposés, de manière isolée (430) électriquement l'un de l'autre, côte à côte ou l'un sur l'autre sur la même face latérale frontale du condensateur à film (300) qui fait face à la couche électriquement conductrice qui est reliée à la liaison électriquement conductrice (350).

5. Ensemble condensateur, dans lequel plusieurs ensembles condensateurs selon l'une des revendications 1 à 3 sont mis en contact les uns avec les autres en série ou en parallèle par l'intermédiaire de plusieurs éléments de connexion (410, 420 ; 710, 720, 740), dans lequel tous les éléments de connexion sont disposés, de manière isolée électriquement les uns des autres, côte à côte ou les uns sur les autres sur les faces latérales frontales des condensateurs à film (300) des ensembles condensateurs qui font face aux couches électriquement conductrices des condensateurs à film (300) qui sont en contact avec les liaisons électriquement conductrices (350).

6. Ensemble condensateur (400) comprenant plusieurs ensembles condensateurs selon l'une des revendications 1 à 3 qui sont disposés côte à côte, dans lequel un premier élément de connexion (410) est relié à respectivement la première couche électriquement conductrice (310) ou à la deuxième couche électriquement conductrice (320) des condensateurs à film (300) des ensembles condensateurs, dans lequel un deuxième élément de connexion (420) est relié à respectivement la première couche électriquement conductrice (310) ou à la deuxième couche électriquement conductrice (320) des condensateurs à film (300) des ensembles condensateurs, qui présentent des polarités opposées par rapport aux premières ou deuxièmes couches électriquement conductrices (310, 320) qui sont reliées au premier élément de connexion (410), dans lequel le premier et le deuxième élément de connexion (410, 420) sont disposés, de manière isolée électriquement, côte à côte ou l'un sur l'autre sur la même face latérale frontale du condensateur à film (300) qui fait face à la couche électriquement conductrice qui est reliée à la liaison électriquement conductrice (350), dans lequel la liaison du premier et du deuxième élément de connexion (310, 320) aux première ou deuxième couches électriquement conductrices respectives est effectuée respectivement soit directement, soit par l'intermédiaire de la liaison électriquement conductrice (350) qui est guidée à travers le passage (340) du condensateur à film (300) respectif.

7. Ensemble condensateur (700) comprenant plusieurs sous-ensembles condensateurs (700a, 700b), les sous-ensembles condensateurs (700a, 700b) comprenant chacun un ensemble condensateur selon la revendication 4 ou un ensemble condensateur selon la revendication 6, dans lequel les sous-ensembles condensateurs (700a, 700b) sont branchés en série au moyen d'un troisième élément de connexion (740), dans lequel le premier, le deuxième et le troisième élément de connexion (710, 720, 740) sont disposées de manière isolée électriquement les uns des autres côte à côte ou les uns sur les autres sur la même face latérale frontale du condensateur à film (300) qui fait face à la couche électriquement conductrice qui est reliée à la liaison électriquement conductrice (350).

8. Ensemble condensateur comprenant :
un premier sous-ensemble comprenant :
au moins un ensemble condensateur selon l'une des revendications 1 à 3 ;
un premier élément de connexion (610) qui entre en contact respectivement avec la première couche électriquement conductrice (310) de l'au moins un condensateur à film du premier sous-ensemble ;
un deuxième sous-ensemble disposé au-dessus du premier sous-ensemble, comprenant :
au moins un ensemble condensateur selon l'une des revendications 1 à 3 ;
un deuxième élément de connexion (620) qui entre en contact respectivement avec la deuxième couche électriquement conductrice (320) de l'au moins un condensateur à film du deuxième sous-ensemble ;
dans lequel le premier élément de connexion (610) entre en contact respectivement avec la première couche électriquement conductrice (310) de l'au moins un condensateur à film du deuxième sous-ensemble par l'intermédiaire de la liaison électriquement conductrice (350) qui est guidée à travers le passage (340) du condensateur à film (300) du deuxième sous-ensemble ; et
dans lequel le deuxième élément de connexion (620) entre en contact respectivement avec la deuxième couche électriquement conductrice (320) de l'au moins un condensateur à film du premier sous-ensemble par l'intermédiaire de la liaison électriquement conductrice (350), qui est guidée à travers le passage (340) du condensateur à film (300) du premier sous-ensemble.

9. Ensemble condensateur selon la revendication 8, dans lequel le premier élément de connexion (610) et/ou le deuxième élément de connexion (620) sont disposés au moins en partie entre le premier sous-ensemble et le deuxième sous-ensemble, et/ou
dans lequel le premier élément de connexion (610) présente des évidements destinés à faire passer l'au moins une deuxième conduite de liaison (350) du deuxième élément de connexion (620), et le deuxième élément de connexion (620) présente des évidements destinés à faire passer l'au moins une première conduite de liaison (350) du premier élément de connexion (610).

10. Ensemble condensateur comprenant :
un premier sous-ensemble comprenant :
au moins un ensemble condensateur selon l'une des revendications 1 à 3 ;
un premier élément de connexion (910) qui entre en contact respectivement avec la première couche électriquement conductrice (310) de l'au moins un condensateur à film du premier sous-ensemble ;
un deuxième sous-ensemble disposé au-dessus du premier sous-ensemble, comprenant :
au moins un ensemble condensateur selon l'une des revendications 1 à 3 ;
un deuxième élément de connexion (920) qui entre en contact respectivement avec la deuxième couche électriquement conductrice (320) de l'au moins un condensateur à film du deuxième sous-ensemble ;
un troisième élément de connexion (940) ;
dans lequel le troisième élément de connexion (940) entre en contact respectivement avec la deuxième couche électriquement conductrice (320) de l'au moins un condensateur à film du premier sous-ensemble par l'intermédiaire de la liaison électriquement conductrice (350) qui est guidée à travers le passage (340) du condensateur à film (300) du premier sous-ensemble, et
dans lequel le troisième élément de connexion (940) entre en contact respectivement avec la première couche électriquement conductrice (310) de l'au moins un condensateur à film du deuxième sous-ensemble par l'intermédiaire de la liaison électriquement conductrice (350) qui est guidée à travers le passage (340) du condensateur à film (300) du deuxième sous-ensemble.

11. Ensemble condensateur selon la revendication 10, dans lequel le premier élément de connexion (910) et/ou le deuxième élément de connexion (920) et/ou le troisième élément de connexion (940) sont disposés au moins en partie entre le premier sous-ensemble et le deuxième sous-ensemble.

12. Ensemble condensateur selon l'une des revendications 10 à 11, dans lequel le premier élément de connexion (910) présente des évidements destinés à faire passer l'au moins une première conduite de liaison (350) du troisième élément de connexion (940), et le deuxième élément de connexion (920) présente des évidements destinés à faire passer l'au moins une deuxième conduite de liaison (350) du troisième élément de connexion (940).

13. Ensemble condensateur selon l'une des revendications 4 à 12, dans lequel les éléments de connexion (410, 420 ; 610, 620 ; 710, 720, 740 ; 910, 920, 940) sont configurés chacun en tant que conducteur, fil, fil plat, grille, tôle de connexion ou barre omnibus.

14. Procédé de fabrication d'un ensemble condensateur (300) selon l'une des revendications 1 à 3, dans lequel, dans le cas d'un condensateur à film, un matériau de condensateur est enlevé pour la réalisation d'un passage (340, 340a, 340b), , et comprenant en outre
la liaison de la première couche électriquement conductrice (310) ou de la deuxième couche électriquement conductrice (320) à une liaison électriquement conductrice (350), et le guidage de la liaison électriquement conductrice (350) à travers le passage (340, 340a, 340b).
